(19) Europäisches Patentamt
European Patent Office
Office européen des brevets

(11) EP 1 592 991 B1

(12) EUROPEAN PATENT SPECIFICATION

(45) Date of publication and mention of the grant of the patent:
**22.11.2006 Bulletin 2006/47**

(21) Application number: **04709854.6**

(22) Date of filing: **10.02.2004**

(51) Int Cl.:
***G02B 1/04*** *(2006.01)* ***G02B 6/02*** *(2006.01)*
***B29D 11/00*** *(2006.01)*

(86) International application number:
**PCT/US2004/003764**

(87) International publication number:
**WO 2004/072697 (26.08.2004 Gazette 2004/35)**

(54) **METHOD AND APPARATUS FOR MANUFACTURING PLASTIC OPTICAL TRANSMISSION MEDIUM**

METHODE UND APPARAT ZUR HERSTELLUNG OPTISCHER ÜBERTRAGUNGSMEDIEN

PROCEDE ET APPAREIL POUR LA FABRICATION DE SUPPORT DE TRANSMISSION OPTIQUE EN MATIERE PLASTIQUE

(84) Designated Contracting States:
**AT BE BG CH CY CZ DE DK EE ES FI FR GB GR HU IE IT LI LU MC NL PT RO SE SI SK TR**

(30) Priority: **10.02.2003 US 446369 P**

(43) Date of publication of application:
**09.11.2005 Bulletin 2005/45**

(73) Proprietor: **NANOPTICS INCORPORATED**
**Gainesville,**
**Florida 32609 (US)**

(72) Inventor: **WALKER, James, K.**
**Gainesville, FL 32605 (US)**

(74) Representative: **Krauss, Jan et al**
**Forrester & Boehmert,**
**Pettenkoferstrasse 20-22**
**80336 München (DE)**

(56) References cited:
**EP-A- 0 733 452**
**WO-A-01/78972**
**US-A- 4 587 065**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 592 991 B1

## Description

Cross-Reference to a Related Application

This application claims priority from U.S. provisional application Serial Number 60/446,369; filed February 10, 2003.

Background of the Invention

Fabrication of graded-refractive-index (GRIN) optical fiber is well known. For example, U.S. Patent No. 5,760,139 and U.S. Patent No. 5,783,636 disclose numerous methods for fabricating a graded-refractive-index optical fiber. In such optical fiber, a dopant is often distributed in a polymer so as to have a concentration gradient in the direction from the center to the periphery. Typically, the dopant is a material having a higher refractive index than the fluoropolymer and the dopant is so distributed as to have a concentration gradient such that the concentration of the dopant decreases in the direction from the center of the optical fiber to the periphery. Hence, a graded refractive index optical fiber can be produced by arranging the dopant at the center and diffusing the dopant toward the periphery. In other cases, a graded refractive index optical fiber is formed wherein the dopant is a material having a lower refractive index than the fluoropolymer, and the dopant is so distributed as to have a concentration gradient such that the concentration of the dopant decreases in the direction from the periphery of the optical fibers to the center. Hence, a graded refractive index optical fiber is produced by diffusing the dopant from the periphery toward the center.

U.S. Patent No. 5,760,139 and U.S. Patent No. 5,783,636 disclose numerous methods for fabrication graded index plastic optical fiber. A first method comprises melting the fluoropolymer, injecting the dopant or a fluoropolymer containing the dopant at the center of the melt of the fluoropolymer, and then molding the melt while, or after, diffusing the dopant. In this case, the dopant may be injected at the center not only so as to form only one layer but also so as to form a rod-like body material such as a preform of an optical fiber, or by melt spinning, which is suitable for forming an optical fiber. A second method involves dip coating the dopant or the fluoropolymer containing the dopant on a core formed from the fluoropolymer by melt spinning or drawing. A third method involves forming a hollow tube of the fluoropolymer by using a rotating glass tube or the like, filling in the polymer tube with a monomer phase which gives the dopant or the fluoropolymer which contains the dopant, and then polymerizing the monomer phase while rotating the polymer tube at a low speed. In the case of interfacial gel polymerization, at the polymerization step, the tube of the fluoropolymer swells up in the monomer phase and forms a gel phase, and the monomer molecules are polymerized while preferentially diffusing in the gel phase. A fourth method involves the use of two kinds of monomers with different reactivities. One monomer forms the fluoropolymer, and the other monomer forms the dopant. The polymerization reaction is carried out so that the compositional proportion of the resulting fluoropolymer to the resulting dopant varies continuously in the direction from the periphery to the center. A fifth method involves hot-drawing or melt-extruding a mixture of the fluoropolymer and the dopant, obtained by homogeneously mixing them or by homogeneously mixing them in a solvent and then removing the solvent by means of evaporation, into fibers, and then (or immediately after the formation of the fibers) bringing the fibers into contact with an inert gas under heating to evaporate the dopant from the surface and thereby forming a graded refractive index. Alternatively, the fibers are immersed in a solvent which does not dissolve the fluoropolymer but dissolves the dopant so as to dissolve out the dopant from the surface of the fibers so that a graded refractive index is formed. A sixth method comprises coating a rod or a fiber of the fluoropolymer with only the dopant which has a smaller refractive index than the fluoropolymer or with a mixture of the fluoropolymer and the dopant, and then diffusing the dopant by heating to form a graded refractive index. A seventh method comprises mixing a high-refractive-index polymer and a low-refractive-index polymer by hot-melting or in a state of a solution containing a solvent, and diffusing them in each other while (or after) multiple layer extruding in a state that each has a different mixing ratio, to eventually obtain a fiber having a graded refractive index. In this case, the high-refractive-index polymer may be the fluoropolymer, and the low-refractive-index polymer may be the dopant. With respect to these fabrication methods, the rate of fiber production is no more than about one meter per minute and, therefore, these fabrication methods are not commercially viable.

U.S. Patent No. 6,254,808 describes a continuous extrusion process capable of producing a graded index plastic optical fiber at speeds of at least Im/sec for 250 microns diameter fiber, the heated length over which diffusion occurs is up to about 400 cm. To achieve the necessary diffusion during the short residence time, the temperature was increased up to 270˚C. In this case, it is expected that there is significant thermal degradation of the optical transmission of the fiber. Results for the optical transmission are not provided in this patent.

U.S. Patent No. 6,265,018 describes a process capable of producing graded index plastic optical fiber by drawing from a preform or by extrusion. The fiber is enclosed within a polymeric tube which is mechanically stable at a temperature above that of which the dopant diffusion is carried out. A reel of the tube-enclosed fiber is produced, placed in a heated oven to effect the optimum amount of diffusion and then removed from the oven. As a result, this is a batch

process. However, it is highly desirable to have a continuous process to minimize labor costs and effect a more commercial process.

U.S. Published Application No. 20020041042 describes a continuous, highspeed production extrusion process of graded index fiber and is incorporated herein by reference in its entirety. Two or more concentric layers of polymer, with at least one additive, are co-extruded within a polymeric tube which is stable at a temperature well above the glass transition temperatures of the inner polymers. This fiber is fed continuously at high speed onto a rotating drum inside a heated oven and after a prescribed residence time the fiber feeds off the drum, out of the heated oven, and is continuously wound on to a reel. When that reel is filled, the fiber is automatically be fed on to a new reel. In this way, continuous production can be effected.

The above fabrication methods employ one or the other of two basic procedures - drawing fiber from a preform and extruding fiber. In addition, it is useful to divide the polymeric materials into two classes - organic polymer, most typically acrylic, and perfluorinated polymer. With respect to organic polymer fiber, GRIN Preforms can be manufactured by several methods. However, the speed is very limited at which the desired fiber, with 0.2mm to 1.0mm diameter, can be drawn. As a result, it is not a commercially viable process. Various attempts to co-extrude organic GRIN plastic optical fiber (POF) have been made with varying degrees of improved production rate. One method, U.S. Published Application No. 20020041042 describes a high speed, continuous, low cost method of producing acrylic GRIN POF with good optical transmission. The theoretical absorption of 655nm wavelength light in acrylic polymer fiber is about 100 dB/km. GRIN fiber drawn from preforms have demonstrated that the experimentally achievable optical absorption can be within 30% of the above theoretical value. Acrylic GRIN fiber can also be extruded with similar light absorption. Thus, organic GRIN plastic optical fiber can be produced at commercially viable speed with the best possible optical properties.

Perfluorinated plastic GRIN POF can permit the transmission of higher bandwidth than acrylic GRIN POF. Small diameter (typically <200 microns) fiber is required to match the high bandwidth, small diameter light emitters and receivers. As a result, perfluorinated polymer preforms (CYTOP® polymer made by Asahi Glass) can be used from which to draw fibers (Trade name: LUCINA®) at a typical temperature of 250˚C and at a moderately high rate. Nevertheless, the high cost of both the material and preform production process, coupled with the moderate fiber production rate mitigate against this process becoming commercially acceptable. The theoretical optical absorption at 850nm wavelength in perfluorinated polymer fiber is a few dB/km i.e. about thirty times less than that for acrylic fiber. Perfluorinated GRIN fiber drawn from preforms has demonstrated typical absorption of approximately 20 to 30dB/km i.e. about five times larger than the theoretical expectation. At 850nm, the wavelength dependence of absorption was shown to be inversely proportional to about the fourth power of the wavelength. (T. Onishi, 2001) This implies the potential importance of Rayleigh scattering that may be due to the small-scale fluctuations in electron density associated with dopant concentration fluctuations. It is therefore desirable to achieve a fiber whose optical attenuation is less than 10dB/km.

LUCINA fiber has a maximum operating temperature of 70˚C which is less than the 85˚C demanded by the Bellcore, IEC-793, IEC-794 and RUS (PE-90) specifications in the industry for connections to electronic racks in telecommunication applications. Specifically, these requirements call for long term stability in the temperature range up to + 85˚C.

Previous attempts to extrude perfluorinated polymer (such as Teflon AF and CYTOP®) fiber have been performed at typical temperatures of at least 250˚C, and in some cases 300˚C, and have resulted in excessive light loss (typically >100dB/km) and in one case, in the range 20 - 30 dB/km). U.S. patent application 200201005102 (Blyler, LL 2002) disclosed that "conventional extrusion techniques, e.g., screw extruders, tended to introduce an undesirable amount of particulate contaminants which increased the (light) loss of the drawn fiber." The high chemical reactivity between degradation products from perfluorinated materials when subjected to high temperatures and metals is a well known challenge to processing technologies. Thus, excessive light attenuation in extruded perfluorinated optical fiber is an unresolved problem in the art.

Prior art perfluorinated GRIN fiber has been limited in its ability to transmit data at high rate. Specifically, the maximum transmission bandwidth has been measured to be about 3 Gigabit per second (Gpbs) over a distance of about 300 meters. The achieved bandwidth has been limited by the less than optimal shape of the transverse GRIN profile. Whereas, the optimal profile is approximately parabolic, the profile produced within the described art has a diffusive tail at large radius which deviates greatly from a parabolic profile. Thus, light rays at large radius in the fiber experience substantial time dispersion which limits the achievable bandwidth. There remains a need to produce a fiber whose specifications meet those of 10 Gbps Ethernet transmissions over the typical enterprise distance of 300 meters.

In summary, there remain several major problems in the production of perfluorinated GRIN plastic optical fiber. The preform route to fiber manufacture produces the fiber at less than desirable optical transmission, and at less than desirable manufacturing speed. The extrusion production route provides fiber at an adequate rate, less than desirable transmission bandwidth and less than desirable optical transmission.

Therefore, there remains a need for a cost effective manufacturing method of perfluorinated GRIN plastic optical fiber which has, for example, a production rate of at least several hundred meters per minute, a light absorption

at 850nm of less than or about 10dB/km, a bandwidth distance product of 10 Gbps * 300 meters and is able to withstand long term operation at 85˚C.

## Brief Summary of the Invention

The subject invention pertains to a method and apparatus for manufacturing plastic optical transmission medium. The subject invention also relates to resulting plastic optical transmission medium, such as plastic optical fiber (POF). In a specific embodiment, the subject invention can provide a continuous, high speed extrusion process for producing perfluorinated graded index polymer fiber. In a specific embodiment, the subject extrusion process can produce at least several hundred meters per minute of fiber with diameters in the range 50 to 200 microns, having light absorption of ≤10dB/km, having bandwidth of 10 Gbps over a 300 meter distance, and thermally stable at 85˚C.

The subject method can involve high speed, continuous extruding of prepolymer(s) within a concentric structural tube. Due to the moderate molecular weight(s) of the prepolymer(s), extrusion can be performed at relatively low temperatures, for example ≤ 150˚C. As a result, thermal or mechanical degradation of the prepolymer(s) and chemical reactivity with the materials of the extruder system can be reduced, or minimized. In this way, minimal light absorption in the final fiber product can be achieved. The subject method also relates to a selection of materials suitable for use in the subject extrusion process.

The extruded fiber can be heated. In a specific embodiment, the extruded fiber is permitted to enter an oven for an appropriate period of time before exiting therefrom. Within the oven, low molecular weight additives can diffuse within the prepolymer(s) to form the desired refractive index profile. The subject method can utilize additives whose refractive index are different, but not much different, from the prepolymer(s) or final polymers. In this way, light scattering from density fluctuations in the fiber material can be reduced, or minimized. In addition, the subject invention can utilize highly soluble additives.

In a specific embodiment, before, during, or after the fiber is within the oven, energy can be supplied to the fiber to increase the molecular weight of the prepolymer(s) to a value in the range 30,000 to 300,000, typical of polymers suitable for optical fibers. The subject method can utilize supplied energy in the form of, for example, electromagnetic radiation, ionizing radiation, ultrasound, and/or thermal energy.

Stress may be created in the graded index fiber, for example in the form of radial or longitudinal mechanical stress. The stress can be induced by, for example, the fiber cooling and/or from drawing the fiber. Such stresses may create density fluctuations in the fiber material which can scatter the light and reduce light transmission. The subject invention can incorporate a method of continuous annealing of the fiber to reduce such density fluctuations, in order to enhance light transmission.

The subject invention can involve a method of on-line control of the refractive index profile of the fiber. The precise shape of this profile determines the communication bandwidth of the fiber. The subject method can reduce, or minimize, the diffusive tail of the profile, permitting very high bandwidth of the product and good light transmission.

The subject invention can utilize materials that permit the resulting optical fiber to be thermally stable at operating temperatures up to 85˚C.

## Brief Description of the Drawings

**Figure 1** illustrates, in flow chart form, the steps for fabrication of plastic optical fiber in accordance with one embodiment of the invention.

**Figure 2** is a cross sectional view of a die, in accordance with an embodiment of the subject invention which is designed to provide four concentric layers of extruded polymeric material.

**Figure 3** illustrates the transverse structure of an embodiment of plastic optical fiber produced at the exit of the die shown in Figure 2, in accordance with the invention, where core prepolymer A incorporates an additive whose refractive index increases that of the matrix, clad prepolymer B has the same chemical structure as the core prepolymer, coat polymer C is a low refractive index polymer used to reduce loss of light at bent regions of the fiber, and tube polymer D is used as a structural element which provides the physical support and containment of the prepolymers A and B, and polymer C.

**Figure 4** shows the chemical structure of the CYTOP® polymer which is a product of Asahi Glass Company.

**Figure 5** shows the chemical structure of Teflon AF® polymer which is a product of E.I. du Pont Company.

**Figure 6** shows the structure of the amorphous homopolymer, 2,2-bbistrifluoromethyl-4, 5-difluoro-1, 3-dioxole (PDD), which is used in the Teflon AF® commercial polymer whose structure is shown in Figure 5.

**Figure 7** shows the chemical structure of a tri-functional derivative of PDD that can be used to produce a crop-linkable copolymer suitable for use in fiber manufacture in accordance with the subject invention.

**Figure 8** shows the chemical structure of a typical PFCB polymer.

**Figure 9** shows the chemical structure of a PFCB copolymer that includes a trifunctional monomer, where extrusion of a pre-polymer gel of this material can be performed at low melt temperature and, subsequently, the gel can be cross-linked to form a mechanical robust polymer matrix.

**Figure 10** shows the chemical structure of a perfluorinated polymer made from a derivative of the CYTOP® monomer, the properties of which are suitable for application in the subject invention.

**Figure 11** shows the necessary polymer glass transition temperature $Tg^{Polymer}$ for thermally stable fiber at 85°C, shown as the solid line versus additive concentration x(%wt/wt), with the data for LUCINA fiber and its base polymer, CYTOP, also shown.

**Figure 12** shows the relation between the difference in refractive index between the additive and the core or cladding polymer and the additive concentration x(%wt/wt) for a fixed numerical aperture of the fiber.

**Figure 13** shows the measured attenuation of LUCINA fiber compared to theoretical prediction.

**Figure 14A** is a schematic of the refractive index profile of a specific embodiment of the subject fiber prior to dopant diffusion.

**Figure 14B** is a schematic of the refractive index profile of the fiber shown in Figure 14A after dopant diffusion has occurred.

**Figure 15A** is a schematic of the refractive index profile of a specific embodiment of the subj ect fiber prior to dopant diffusion.

**Figure 15B** is a schematic of the refractive index profile of the fiber shown in Figure 15A after dopant diffusion has occurred.

**Figure 16** shows the predicted attenuation of a specific embodiment of perfluorinated fiber produced in accordance with the subject invention compared to theoretical prediction.

**Figure 17** shows the calculated wavelength dependence of the transmission bit rate over a 1 Km distance using the perfluorinated fiber shown in Figure 16 compared to silica glass multi-mode (MM) fiber, where the spectral width of the light source was assumed to be 1nm.

**Figure 18** is a schematic of an embodiment of the subject invention used to jacket the simplex polymer optical fiber that has been produced as shown in Figure 1.

**Figure 19** is a schematic of an embodiment of the subject invention used to jacket the duplex fiber F1 and F2, where strengthening elements S1 and S2 are fed into the crosshead die, and the final product, duplex-jacketed POF is spooled.

**Figure 20** is a cross section view of a duplex cable of POF, in accordance with the subject invention, where optical fibers F1 and F2 are surrounded by a jacket J within which there are two strengthening fibers S1 and S2.

**Figure 21** is a cross section view of a ribbon cable containing eight plastic optical fibers F1 - F8, accordance with the subject invention, where jacket polymer J surrounds all the POF's and incorporates two structural elements S1 and S2.

**Figure 22** is a schematic of an Active Star Architecture for deployment of fiber to the home (FTTH), which may incorporate fiber made according to the subject invention in, for example, the Distribution Loop (Last Mile) between the Remote Node and the Home.

**Figure 23** is a schematic of a Passive Star Architecture for deployment of fiber to the home (FTTH), which may incorporate fiber made according to the subject invention in the Distribution Loop (Last Mile) between the Remote Node and the Home.

**Figure 24** is a schematic of a Wave Division Multiplexer (WDM) Passive Optical Network (PON) for deployment of fiber to the home (FTTH), which may incorporate fiber made according to the subject invention in the Distribution Loop (Last Mile) between the Remote Node and the Home.

**Figure 25** is a schematic of a Wavelength Division Multiplexer (WDM) Home Run Architecture for deploying fiber to the home (FTTH), which may incorporate fiber made according to the subject invention.

## Detailed Description of the Invention

The subject invention pertains to the manufacture of graded index (GRIN) polymer fiber (POF). In a specific embodiment, the subject fiber can have a diameter in the range of about 50-micron to about 1000-micron. In a further embodiment, the subject fiber can have a diameter in the range of about 50-microns to about 200-microns. The subject method of manufacture can provide a fiber whose optical transmission is close to that which is theoretically possible and whose bandwidth for data transmission is also close to that which is theoretically possible.

According to one embodiment of the invention, as shown in Figure 1, purified monomer is reacted to form a prepolymer gel. The prepolymer is fed into a core extruder or gear pump E1 and a clad extruder or gear pump E2. Low molecular weight components of the gel such as monomers and oligomers may be vented from the extruder or gear pump, if desired. One or other, or both, of the prepolymer streams P1 and P2 may be mixed with diffusible dopants or

additives. The additive(s) can have a refractive indice(s) which when diffusion is complete provides the desired index profile.

The subject invention teaches a method of minimizing thermal degradation of the prepolymer matrix during the processing of the material within extruders. Thus, processing the prepolymeric material can be performed at low temperature. In a specific embodiment, processing the prepolymeric material is performed for as short a time as possible at the given temperature. As a result, substantially fewer fluorine containing low molecular weight compounds are produced as a result of thermal degradation of the prepolymer. The presence of these low molecular weight compounds, such as hydrofluoric acid, in the prepolymer could result in the presence of radicals, metal ions and metal complexes from the extruder and other light absorbing moieties.

The cited patent literature on the manufacture of acrylic optical fiber teaches that the presence of transition metal ions must be at levels $<10^{-8}$ wt/wt of polymer to permit light transmission of 120 dB/km. Since perfluorinated fiber offers an improvement of about thirty to one hundred times less light attenuation than acrylic fiber, the desired upper level of metal ion content can be $<10^{-10}$ wt/wt.

The subject invention relates to a method which can provide a wide range of control over the temperature of processing the prepolymer. As a result of this control, the level of metal ion concentration and thermal degradation products can be controlled.

To permit processing at low temperature, a specific embodiment of the subject invention can utilize materials such that the molecular weight of the prepolymer matrix can be in the range of about 3,000 to about 30,000 during the extruder processing stage of fiber manufacture. A post-extrusion step can be incorporated to increase the molecular weight of the matrix to a value in the range of about 30,000 to at least about 300,000, which can confer good mechanical and thermal stability to the fiber. There are several ways in which these two manufacturing steps can be implemented in accordance with the subject invention.

The prepolymer molecular weight can be chosen such that the viscosity of the specific prepolymer plus index modifying material is in the range of about 100 to about 1,000,000 poise and more typically in the range of about 1,000 to about 100,000 poise at extruder E1, E2 which operate with zone temperatures not exceeding about 225˚C, more preferably less than 175˚C and even more preferably less than 150˚C. It should be noted that these prepolymer process temperatures are typically at least 100˚C less than the processing temperatures of preforms or standard polymer extrusion temperatures. Specifically, the prepolymer weight can be chosen to obtain a desired process temperature. Core and cladding prepolymer materials containing appropriate refractive index modifying additives can be extruded through concentric nozzles in the die D. A cross-sectional view of a specific embodiment of a co-extrusion die in accordance with the subject invention is shown in Figure 2. The additives may be added to the prepolymer gel prior to, during, or after the extrusion process.

A third extruder E3 can provide a concentric coat polymer, P3, of low refractive index on the outside of the core-clad structure. The thickness of the coat polymer is not limited, but is preferentially in the range of about 2 to about 500 microns and more preferably in the range of about 5 to about 50 microns. This coat polymer can reduce, or minimize, light losses when the fiber is bent with a small bend radius. The refractive index of the coat polymer is preferably lower by at least 0.005 compared to the outer surface of the clad polymer. The difference in the refractive index is more preferably greater than 0.015, and most preferably more than 0.03. In general, the smaller the fiber diameter the smaller the loss of light for a given bend angle. The diameter of the light transmission region (core plus clad) of the subject fiber is not limited but is preferably less than 1000-microns and more preferably less than 200 microns. The coat polymer preferably contains a low refractive index additive.

Finally, a fourth polymer P4 can be extruded from extruder E4 and form a solid tube to surround the three inner polymeric materials. This tube can provide structural support throughout the thermal processing of the inner polymeric materials. The transverse structure of plastic optical fiber in accordance with a specific embodiment of the subject invention is illustrated in Figure 3. The thickness of the tubing polymer is not limited, but is preferably in the range of about 20 to about 500 microns and more preferably in the range of about 40 to about 200 microns. The polymeric material forming this tube can be chosen so as to retain its structural mechanical properties up to a temperature of at least 175˚C and preferably up to a temperature of at least 200˚C. The polymeric material forming the tube can be extruded through a section of the die shown in Figure 2 that is preferably but not necessarily, thermally insulated from the rest of the die. This thermal insulation may be desirable because of the potential temperature difference between the two sections of the die. The temperature of the die body for forming the tubing can be in the range of about 175˚C to about 280˚C, which can be substantially above the temperature range of the rest of the die, which can be in the range of, for example, about 100˚C to about 175˚C.

The four-component fiber can enter a heated oven O where the temperature can be in the range of about 125 degree Celsius to about 200 degree Celsius. The additives can diffuse rapidly in the prepolymers to produce the desired graded index profile. Within the oven, the fiber can be wound on a rotating drum structure. The diameter and length of the rotating drum can be selected such as to maintain the fiber in the oven for a time period adequate to produce the desired index profile. Design parameters of this process step have been described in U.S. Published Application No.

20020041042, which is incorporated herein by reference in its entirety.

The fiber can then be exposed to a source of energy E to activate the prepolymer and thereby increase the polymer molecular weights to the range of about 30,000 to about 300,000 and their glass transition temperatures to greater than 105 degrees Celsius and preferably greater than 120 degrees Celsius. The source of energy may be electromagnetic radiation, including ultraviolet, visible, or infrared radiation; ionizing radiation, including x-rays, electron beam, or other particulate energy; ultrasound; and/or thermal energy.

In a specific embodiment of the subject invention, the source of energy, E, can be located within the oven. In a specific embodiment, the oven can supply thermal energy as the source of energy, E.

In a further embodiment of the invention, the source of energy, E, is located between the exit of the die and the entrance to the oven. In this case, all diffusion of the additive(s) occurs in the final polymeric matrix. This embodiment leads to slower development of the final index profile, but in some cases can provide a higher degree of control of the profile.

In another specific embodiment, the additive diffusion can be accomplished in two, or more, stages. For example, a portion of the additive diffusion can be accomplished before supplying energy to activate the prepolymer and the remaining additive diffusion can be accomplished after activation of the prepolymer. In this example, the additive diffusion prior to activation of the prepolymer can be fast, while the additive diffusion after the activation of the prepolymer can allow ore accurate control of the final diffusion result.

The subject invention relates to a method where the fiber can be thermally annealed to minimize residual stress. The continuously extruded fiber can be coiled in a helical form on a roller within a heated enclosure H. A temperature gradient can exist along the axis of the roller and heated enclosure. The time dependence of the drop in temperature of the fiber can be controlled by the spatial dependence of the above temperature gradient. The radial temperature difference between the axis and outer radius of the fiber can be minimized as the fiber temperature falls and the polymer matrix of the fiber enters the glassy state and continues to cool to ambient temperature. This temperature difference is preferably always less than 6˚C and most preferably less than 3˚C. In this way, residual radial and longitudinal stress in the fiber can be minimized prior to spooling the fiber.

In one embodiment of the invention, the heated enclosure H is identical to the oven O.

In another embodiment of the invention, the annealing process can be performed after the fiber has been spooled. In this case, spools of fiber can be placed within a heated oven for a period of time between about 1 hour and about 30 hours to relieve residual stress in the fiber optical material. The temperature of the oven can be initially above the glass transition temperature of the core/clad polymer and fall in a programmed way to ambient temperature. The oven temperature is preferentially reduced at a rate less than 10˚C per hour.

In one embodiment of the invention it is desired to maximize the flexibility of the final fiber. This can be achieved by stretching the fiber by a ratio of 1.5 to 4.0 at a selected temperature, T(˚C) where Tg(˚C) + 60˚C≥ T(˚C) ≥ Tg(˚C) + 20˚C where Tg(˚C), is the glass transition temperature of the optical fiber.

It is apparent to one skilled in the art, that the subject invention can be practiced in a variety of configurations of the processing equipment.

The present invention can be employed using a large range of polymers, including organic polymers, partially fluorinated polymers, and perfluorinated polymers. Such polymers may also be partially or totally chlorinated. Examples of organic polymers include polymethyl methacrylate, polycarbonate and polystyrene. Examples of partially fluorinated polymers include trifluoroethylmethacrylate, partially halogenated polyacrylates, fluoroalkyl acrylates, perfluorocyclobutyl (PFCB) aromatic ether based polymer, and fluoroalkyl methacrylates. Examples of perfluorinated amorphous polymers include CYTOP®, (see Figure 4) from Asahi Glass Company and Teflon® AF, (see Figure 5) a family of polymers from E.I. du Pont.

The following discussion will focus on the use of amorphous perfluorinated polymeric implementations of the subject invention. However, it is to be understood that other embodiments of the invention will be apparent to those skilled in the art using organic and partially halogenated polymers.

In choosing among the large range of available polymers for the core and clad polymers, consideration should include one or more desirable general characteristics. These characteristics can include the following:

A homopolymer is preferable but not essential. A copolymer like Teflon® AF may have statistical fluctuations in adjacent repeat units which give rise to an extremely low but not negligible level of crystalinity or phase separation. This can impede reaching the theoretical optical transmission. A copolymer with one monomer present at very low concentration is unlikely to have reduced optical transmission.

A desirable glass transition temperature is in the range of about 108˚C to about 335˚C and more preferably in the range of about 120˚C to about 150˚C. LUCINA® fiber is based on CYTOP® (Tg=108˚C) and has an upper limit of thermal stability for the index profile of 70˚C. The generally accepted maximum standard operating temperature for back plane optical interconnects and outdoor installations is 85˚C. Taking into account the plasticization effect of the additives, a polymeric Tg>120˚C is preferable. Other factors influencing the choice of Tg will be discussed later.

A polymer refractive index ≥ 1.32 is prefered. To minimize bend loss, the coat polymer should optimally have

a difference in refractive index of ≥0.03 from that of the fiber. Teflon® AF (2400) is the lowest known refractive index commercial polymer and has $n_D$ = 1.293. It may be used as the coating polymer. This provides a lower limit of acceptable refractive index for the fiber core and clad materials, i.e. $n_D$=1.32. This requirement excludes the use of the E.I. du Pont dioxole homopolymer PDD, shown in Figure 5, for a core/clad polymer since $n_D$ = 1.291.

The polymer may be a thermoplastic or thermoset. An elastomeric polymer is excluded because of the generally higher dopant diffusivity that would lead to thermal instability of the refractive index profile.

Activation of the polymer gel should preferably not produce condensates or by-products and preferentially does not require catalysts or initiators.

Several perfluorinated monomers can provide polymers that meet these general characteristics and may be used in the production of perfluorinated plastic optical fiber. There are several general methods by which these polymers can be prepared. These methods include the production of thermoplastics and thermoset materials.

In a specific method in accordance with the subject invention the prepolymer gel can be produced by limiting the molecular weight of the material during the initial polymerization process. Appropriate end caps of the chains can be chosen such that they can later be activated by energy to form longer length polymeric chains. For example, using a free radical initiator, such as AIBN (azoisobutyronitrile), at 70 degrees in the presence of a low molecular weight perfluoroalkyl iodine will initiate the reaction with perfluoroalkyl radicals and will cap the chains with the thermally and photochemically labile iodide substitute. Control of the molecular weight of the polymer can be maintained by controlling (a) the relative concentration of the perfluoroalkyl iodide, and/or (b) the time and temperature of the polymerization process. This art is well known in the field of monomer polymerization.

Another method in accordance with the subject method involves forming the prepolymer gel from a low molecular weight copolymer which contains a low percentage of a trifunctional comonomer. Later activation by energy cross-links the polymer to produce a thermoset optical material. This latter type of process has been described (US 6,368,533) by Morman in the production of fabric of various kinds.

Another method of polymer preparation in accordance with the subject invention involves providing a multimodal molecular weight homo, co, or terpolymer composition. This polymer can be extruded at high speed at low temperature. The polymer can contain a low molecular weight component and a high molecular weight component and, optionally, a very high molecular weight component. The concentration of the low molecular weight component can be chosen to achieve the desired low extrusion temperatures described earlier, together with the desired extrusion speed. It is desirable, but not necessary, to increase the molecular weight of the low molecular weight component of the polymer at a later stage of the fiber processing as described earlier. This technique of using a multi-modal polymer has been described by Duchesne *et al.* in U.S. Patent No. 6,242,548 for the production of electrostatically dissipative fluoroplastic materials. A related multimodal fluoro polymer has been shown to assist in processing a thermoplastic polymer, U.S. Patent No. 6,277,919.

Another method in accordance with the subject invention for improving polymer processibility at low temperature has been described by Pham in U.S. Patent No. 5,508,359. This method also depends on the use of a multimodal polymer composition. This composition can contain a low molecular weight component and a high molecular weight branched polymer component. Improved combinations of physical properties and processibility can be obtained.

It is apparent to one skilled in the art, that the above material preparation techniques may be varied and/or used in combination to provide various methods of low temperature and high speed polymer processing. At these low temperatures, there can be negligible polymer degradation during the time the material is in contact with the metal of the extruder, gear pumps, and dies used in fiber production. At a later stage of the fiber processing the perfluorinated material can, optionally, have its molecular weight increased by energy activation. At this time, the perfluorinated material can be surrounded by structural polymer and any small degree of thermal degradation of the perfluorinated material does not significantly degrade optical transmission.

One class of suitable monomers is the derivatives of the 2,2 - bistrifloromethyl - 4,5 - difluoro - 1,3 - dioxole (PDD) homopolymer, shown in Figure 6. Table 1 illustrates some members of this class. (Smart, B. et al. *Macromo, symp.* 98, 753-767 (1995)) The approximate glass transition temperatures and refractive indices $n_D$ of the corresponding homopolymers are shown in Table 1. The first member of Table 1 is the PDD monomer shown in Figure 6. It can homopolymerize to form an amorphous fluoropolymer with glass transition temperature of 335˚C. Since its refractive index is very low, 1.291, this polymer is not a preferred candidate for use in fiber manufacture as discussed previously.

Table 1- Properties of F-dioxole Homopolymers

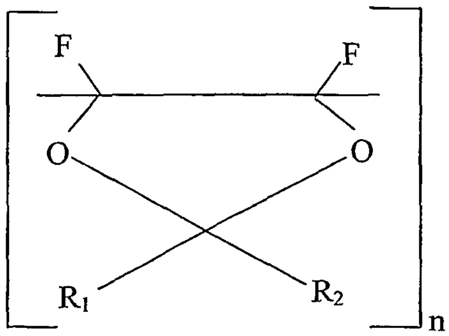

| $R_1$ | $R_2$ | Tg(˚C) | $n_D$ |
|---|---|---|---|
| $CF_3$ | $CF_3$ | 335 | 1.291 |
| $CF_2Cl$ | F | ~230 | ~1.32 |
| F | Cl | ~200 | ~1.34 |
| $CF_3$ | $C_2F_4Cl$ | ~150 | ~1.33 |
| $C_2F_4Cl$ | F | ~170 | ~1.33 |

Some PDD derivatives with a single chlorine substitution in each of the known synthesized monomers are shown in Table 1. Their homopolymer refractive indices and glass transition temperatures are estimates based on their perfluorinated analogs. It can be seen that these polymers can be used for making optical fiber in accordance with the subject invention. Additional PDD derivatives with double or greater chlorine atom substitution may also be used.

In another embodiment of the subject invention, the prepolymer gel can be formed from a PDD based copolymer which subsequently is activated to make a cross-linked polymer network. For example, any one of the monomers in Table 1 can be copolymerized with the trifunctional monomer whose structure is shown in Figure 7. The trifunctional monomer may have up to 10-weight % composition and preferentially less than 3 weight %. In this way, a branched copolymer gel may be formed with controlled molecular weight in the range of about 3,000 to about 30,000. The prepolymer gel may be extruded as described earlier. Subsequently, energy, such as heat, may be supplied to effect the cross-linking of the polymer. In another embodiment of the invention, a cross-linking agent such as perfluorobutadiene may be used at, for example, less than 5-weight % composition and preferably less than 1.5 weight %. Cross-linking can then be tailored to give a fast cure and provide a stable high molecular weight polymer.

A second class of candidate perfluoro polymers for fabricating plastic optical fibers in accordance with the subject invention is based on perfluorocyclobutyl (PFCB) polyaryl ethers. The general class of PFCB polymers was originally targeted for microelectronic applications at the Dow Chemical Company (Babb, D.A. et al., *J. Polym. Scie, Part A. Polym Chem* 1993, 31, 3465.). Recent work by Smith, D.W. et al. *Journal of Fluorine Chemistry* 104 (2000) 109-117 on structure/property relationships is of relevance for fabricating stable optical materials.

The PFCB approach has been to combine flexible yet thermally robust, aromatic ethers (up to the present time these have not been perfluorinated) with fluorocarbon linkages. The step growth addition type polymer chemistry is thermally activated. Cycloaddition polymerization results in well defined linear or network polymers containing known trifluorovinyl aromatic terminal groups at any stage of the polymerization.

The typical structure of such a polymer is shown in Figure 8. Specific structural examples of the perfluorinated aromatic linkage, Ar, are given in Table 2. The corresponding estimated homopolymer values of glass transition temperature and refractive index are likewise listed in Table 2. The perfluorinated analogs of these polymers have not been synthesized but, they are expected to be amorphous, and have physical properties which meet the general criteria specified earlier for use in the manufacture of plastic optical fiber. It has been found that the viscosity of the prepolymer gel of PFCB of the above type can be precisely controlled by choice of monomer, polymerization time and temperature.

Table 2 - Specific Structural Examples of Perfluorinated Aromatic Linkages

In another embodiment of the present invention, the prepolymer gel may be activated by energy to form a cross-linked polymer network. One way in which this

| Name | Ar Structure | Tg(˚C) | Refractive Index |
|---|---|---|---|
| Ar1 | 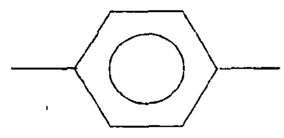 | ≈56˚C | ≈1.45 |
| Ar2 | 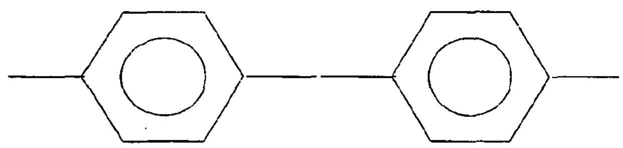 | ≈180˚C | ≈1.510 |
| Ar3 | 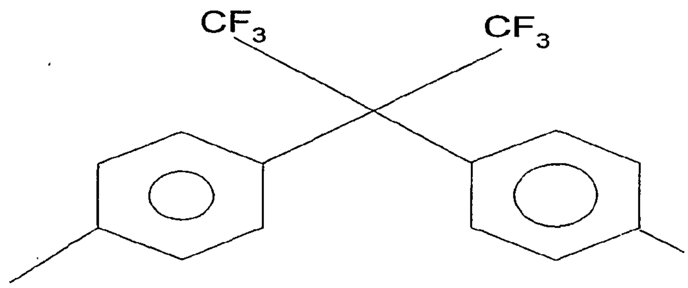 | ≈120˚C | ≈1.3 to 1.4 |

can be achieved is to form a PFCB copolymer which includes a trifunctional monomer. One such copolymer has its structure shown in Figure 9. In this case, the prepolymer gel is a branched copolymer of variable conversion. As long as functional group (f) conversion at gelation (Pgel) follows Flory's theory of rubber elasticity (Pgel=1/f-1), the extent of conversion can be precisely controlled given the composition at zero time (Cheatam, M. et al. 1998). The prepolymer molecular weight and viscosity can be controlled to be suitable for extrusion at relatively low temperature. Subsequently, the material can be thermally activated to form a cross-linked matrix. In a specific embodiment, the material can be thermally activated at about 175˚C.

Another class of monomers suitable for use in fabricating plastic optical fiber in accordance with the subject invention is based on derivatives of the CYTOP® monomer illustrated in Figure 4. Most monomer derivatives based on structural changes made to CYTOP® result in lowering the glass transition temperature of the corresponding homopolymer below 108˚C which is the Tg of the commercial product. An exception is the derivative whose monomer structure is shown in Figure 10. The glass transition temperature and refractive index of the corresponding homopolymer is 155˚C and 1.41, respectively (Smart, B. et al. *Macromo, symp.* 98, 753-767 (1995)). Both CYTOP® and the above derivatives are homopolymers which can be used as core and clad materials in accordance with the present invention.

Another class of monomer suitable for use in fabricating amorphous perfluoropolymer plastic optical fiber is based on derivatives of the perfluorodioxole monomer described in U.S. Patent No. 5,498,682. Glass transition temperatures and indices of refraction can be obtained for polymers within the desirable ranges described earlier. In addition, this class of perfluorodioxoles does not tend to homopolymerize spontaneously and can be kept at room temperature after a conventional distillation. This convenience in polymer preparation is matched by the good mechanical properties and good thermal stability of the polymers.

Another class of perfluorinated monomer which can provide amorphous polymers and copolymers which can be utilized in accordance with the subject invention is described in U.S. Patent Application Publication No. 20030125490. Transparent polymers with high glass transition temperatures are described.

Another class of perfluorinated monomer which can provide amorphous polymers and copolymers is described in U.S. Patent Application Publication No. 20020177667. Highly transparent polymers with glass transition temperatures higher than 120˚C are described. This range of glass transition temperature is desired as described later.

Low molecular weight (3,000 to 30,000 Dalton) polymers of any one of these monomers can be produced by the methods described in the patents describing these materials. The degree of polymerization can be controlled also by the methods described previously in the subject invention. Post-extrusion energy activation can be accomplished by one or more of the methods described earlier and the polymerization can be completed when the weight average molecular weight is in the range of about 30,000 to about 300,000.

In general, non-aromatic polymers are preferred since, in this case, Rayleigh scattering is minimized and optical transmission is improved.

It would be apparent to one skilled in the art, having the benefit of the subject disclosure, that the subject invention can be practiced with a variety of amorphous perfluorinated polymers which can serve as the core and cladding materials.

The coating polymeric material which surrounds the optical cladding material should preferably have several characteristics. First, it should adhere well to the clad polymer. Second, it is preferable to have a coat polymer with refractive index of at least 0.015, and more preferably at least 0.03, less than that of the outside of the clad polymer. With this latter refractive index difference, bending the fiber with a radius of curvature of 10mm produces an acceptable light loss of less than 0.5dB. In a specific embodiment, suitable choice of coat material is a copolymer of one low refractive index monomer and at least 10% of the principal monomer composing the cladding polymer. Third, the coat polymer should preferably be amorphous. Finally, the coat polymer should preferably be perfluorinated. The coat polymer can be extruded as a gel or as a low refractive index polymer which may be composed of PDD monomer and 10% to 50% monomer of the core/clad polymer. The presence of the latter comonomer can help ensure good adhesion to the core/clad materials.

The tube polymer can provide structural support to the optical fiber at temperatures up to at least 150˚C, and preferably at least 170˚C, and more preferably at least 200˚C. The material is preferably extruded at a melt temperature less than 270˚C, and more preferably less than 230˚C. The choice of tubing material is preferably a hydrophobic, crystalline structural polymer such as "Teflon" like material. An example is polyvinylidene fluoride (PVDF) which is a relatively inexpensive and melt processable homopolymer. This polymer has a crystalline melt temperature of 171˚C and can provide good mechanical support at 150˚C for an indefinite time. The polymer has a high tensile strength of 7,000 $lbf/in^2$ at 23˚C and good impact strength. Water absorption in the polymer is very low, 0.04%, which is highly desirable to minimize water transport into the optical fiber. Some relevant thermal properties of PVDF are shown in Table 3.

Certain polyesters may also be used successfully as tubing polymer. The present invention can use a number of optical polymers for forming the graded index material. These materials can have substantially different thermal properties and processing temperatures. An attractive feature of the polyester resins is the range of melting points of some homologous polyesters (Goodman, I. And Rhys, J.A. *Polyesters,* Vol. 1: Saturated Polymers, Iliffe, London (1965)). The melt point range is from about 50˚C to about 300˚C. An example of polyester which may be used for tubing material is polyethylene terephalate (PET). Some relevant thermal properties of this polymer are shown in Table 3.

Table 3 - Some thermal properties of potential coat polymers

| Polymer | Melt Temperature $T_m$ (˚C) | Glass Transition Temperature Tg (˚C) | Softening Point Temperature (˚C) |
|---|---|---|---|
| PVDF | 171 | | 150 |
| PET | 265 | 67 | 170-180 |
| HYTREL® | | | 135-180 |
| TEFZEL® | | | 180 |

The polyester class of polymer has generally good mechanical properties and low water absorption. Many commercial copolymers and polymer blends have been introduced based on esters (Brydson, J.A. "Plastics Materials" *Buttenworth Scientific* (1982)). Other commercial products employ reinforced polyester resins which also can be used with the subject invention.

Other possible classes of polymer for use as tubing material include HYTREL® and TEFZEL®, both of which are available from duPont.

Refractive index modifying additives or dopants may be used in the core, clad, or both core and clad polymers. In a specific embodiment, an index-raising additive can be added to the core polymer and an index-lowering substance when added to the clad polymer. These additives preferably have one or more of the following characteristics:

Molecular weight in the range of about 200 to about 3000 and preferably in the range 250 to 1500.

Soluble preferably to at least 10 weight percent more than the concentration which is used in the subject invention. This is to minimize the tendency for microcrystallization and/or phase separation of the additive in the polymer.

Diffusivity of $10^{-8}$ to $10^{-3}$ $cm^2$/sec in the prepolymer gel or polymer at the processing temperatures of this invention.

Modify the refractive index of the polymer matrices of core and clad to permit an adequately large (≥0.15) numerical aperture of the fiber.

Have low vapor pressure at the processing temperatures employed in the invention.

Suitable additives for use with the previously described perhalogenated polymers include perhalogenated oligomers and perhalogenated aromatic compounds. These compounds may also contain one or more bromine or iodine atoms(s) to provide a high refractive index. Specific examples of such additives are 1,3-dibromotetrafluorobenzene and

bromoeheptafluoronapthalene. Alternatively, a perhalogenated compound may contain sulphur, phosphorus or other metal atom(s). Preferably, the additives have refractive indices whose values are ≤ 0.1 different from those of the polymer matrix. Such additives may be chosen from fluorinated compounds or fluorinated compounds with one or more chlorine substitutes. Additives to lower the refractive index of the polymer matrix may be perfluorinated ethylene oligomers. These additives can be particularly useful in the coat polymer.

In one embodiment of the subject invention, an index-raising additive is added to the core polymer, with no other additives used.

In a second embodiment of the subject invention, an index-lowering additive is added to the cladding polymer, with no other additives used.

In a third embodiment of the subject invention an index-raising additive is added to the core polymer and an index-lowering additive is added to the cladding polymer, with no other additive used.

In a fourth embodiment of this invention, an index-raising additive is added to the core, an index-lowering additive is added to the cladding polymer, and an index-lowering additive is added to the coat polymer.

The subject invention pertains to a method of fiber manufacture which permits a light attenuation of ≤10db/km at 850nm wavelength. The light loss of existing commercial LUCINA fiber is typically 20 to 30 dB/km at 850nm.

The subject invention also relates to a method to simultaneously produce a fiber whose GRIN profile is stable up to 85˚C and has an optical attenuation at 850nm of ≤10dB/km.

A reasonable criterion for immobilization of additives in the polymer is that the maximum operating temperature $T_{op}$, of the fiber should be at least 20˚C below the glass transition temperature, $Tg^{Plasticized}$, of the plasticized polymer. This may be written as:

$$Tg^{\text{Plasticized}} \geq T_{op} + 20^{0}C$$

Different additives can cause quite different reductions in the glass transition temperature of the pure polymer whose glass transition temperature is $Tg^{Polymer}$. However, for many additive/polymer combinations a convenient characterization is:

$$\frac{\Delta Tg^{\text{Plasticized}}(C^{0})}{x\ (\%wt/wt)} = (1.5+1)(C^{0})$$

where x is the additive concentration in %wt per wt of the polymer. The minimum value of $Tg^{Polymer}$ for manufacturing thermally (85˚C) stable fiber may therefore be written as:

$$Tg^{\text{Polymer}} \approx T_{op} + 20 + 1.5x$$

This thermal stability criterion is shown graphically in Figure 11.

The data points corresponding to the maximum operating temperature (70˚C) of LUCINA fiber and the glass transition temperature of its base polymer CYTOP are shown in Figure 11. The necessary polymer glass transition temperature, $Tg^{Polymer}$, for thermally stable fiber at 85˚C is shown versus the additive concentration, x (% wt/wt). The necessary $Tg^{Polymer}$ is 120˚C to 150˚C in the range 10% to 30% of additive concentration. Despite thermal stability at 85˚C being able to be achieved in the above range, the concomitant requirement of optical attenuation being ≤10dB/km imposes a constraint on the acceptable range of x.

Before discussing the optimum range of x, it is desirable to fix the numerical aperture (NA) of the fiber. The NA is defined as

$$NA = 1/\sqrt{2}\ \sqrt{[(N_{axis} + N_{clad})(N_{axis} - N_{clad})]}$$

where $N_{axis}$ and $N_{clad}$ are the refractive indices on the axis and outer radius of the cladding polymer respectively. The NA is a measure of the acceptance phase space for optical transport in the fiber. A vertical cavity surface emitting laser (VCSEL) is a typical device to be used with the subject fiber. A numerical aperture, NA, = 0.18 is adequate to accept more than 90% of the light from a typical VCSEL. For this reason, an NA = 0.18 is assumed in the following discussion. This is also the NA of LUCINA fiber.

To a first approximation, for any perfluorinated fiber

$$N_{axis} \approx N_{clad} \approx 1.35$$

and in this case

$$\Delta N = N_{axis} - N_{clad} \approx 0.024.$$

As stated previously, a specific embodiment of the subject invention calls for an index-raising additive to be added to the core polymer and an index-lowering additive to be added to the cladding polymer. For illustrative purposes we shall assume that equal additive concentrations are added to the core and cladding polymers. Then, 0.012 is the change in refractive index of the polymer due to the additive in the core or cladding polymer. Then we may write:

$$x.10^{-2}\,(N_{additive} - N_{polymer}) = 0.012$$

where, as before, x is the concentration of additive (%wt/wt) in the core or cladding polymer and $N_{additive}$ and $N_{polymer}$ are the refractive indices of the additive and polymer, respectively. We define $\Delta n = N_{Additive} - N_{Polymer}$ and obtain the relation:

$$x.10^{-2}\,\Delta n = 0.012$$

The graphic representation of the relation of x and An is shown in Figure 12.

It should be noted that LUCINA fiber has been made with an index-raising additive in the core CYTOP material and no additive in the cladding CYTOP polymer. In this case:

$$x\;10^{-2}\Delta n = 0.024$$

and for a concentration of 10% wt/wt of additive the value of $\Delta n \approx 0.24$. This datum point is shown in Figure 12. The large value of $\Delta n$ produces excess Rayleigh scattering and light attenuation.

It can be seen in Figure 12, that a specific embodiment of fiber in accordance with the subject invention can have a substantially smaller difference in refractive index, $\Delta n$, between the corresponding additives and the base polymer. As will be seen later, this can be important to reduce light loss from Rayleigh scattering.

In Figure 13, the experimental and theoretical attenuation of LUCINA fiber are shown. At 850 nm the experimental (Blyler, L 2002) and theoretical LUCINA fiber attenuations are seen to be about 30 dB/km and 10 dB/km respectively. The experimental excess 20 dB/km of attenuation is interpreted as due to thermal and mechanical degradation of the CYTOP polymer during the high temperature fiber production processing as discussed earlier. This is the motivation for the low temperature fiber processing method described in the subject invention. With the low temperature processing of the subject invention, the theoretical attenuation of 10 dB/km for LUCINA fiber should be attainable.

The subject invention also pertains to a method of reducing the theoretical LUCINA attenuation of 10 dB/km

by reducing the Rayleigh scattering contribution of 5 dB/km.

The loss of light from Rayleigh scattering in the base CYTOP material and also from the additive plus polymer in LUCINA fiber are shown in Figure 13. Scattering dominates light loss at wavelengths less than about 1200nm. At longer wavelengths, light absorbance dominates. The excess Rayleigh scattering, $\chi$, from the additive can be substantially reduced by using a smaller value of $\Delta n$ as discussed earlier.

$$\chi(\text{dB/km}) \approx K.x.10^{-2}\ \Delta n^2/\lambda^4$$

where K is a constant and $\lambda$ is the wavelength of the light. The experimental verification of the factor $\Delta n^2$ was shown by deGraaf, M, et al.2001.

The parameters x and $\Delta n$ for LUCINA fiber and the fiber manufactured according to the present invention are shown in Table 4.

Table 4 - Comparison of a Specific Choice of Parameters Controlling Excess Rayleigh Scattering in LUCINA and the New Fiber of the Subject Invention.

| Parameter | LUCINA | New Fiber of the Subject Invention |
|---|---|---|
| $x.10^{-2}$ | 0.1 | ≥0.2 |
| $\Delta n$ | 0.24 | ≤0.06 |

The value of $x\Delta n^2$ for specific embodiments of fiber in accordance with the subject invention compared to LUCINA can be 1/8. Thus, excess Rayleigh scattering from the additives in specific embodiments of the subject fiber is 1/8 that of LUCINA, and the typical attenuation loss from additives in these embodiments of the subject invention fiber can be ≤1dB/km at 850 nm, or less at longer wavelengths.

The excess Rayleigh scattering from additives may also contribute to extrinsic scattering from structural defects at the cladding/coating polymer interface. These structural defects are on the scale of 0.03 microns and are due to the deformations at the interface caused by the finite molecular size of the two different types of polymers. As a result, the refractive index fluctuates on the above scale. The existing method of producing graded index LUCINA fiber provides a profile similar to Figure 14 (b). Thus, the coating polymer acts as a step-index cladding material. There are two principle mechanisms for light reaching that interface. A fraction of the light which experiences excess Rayleigh scattering from additives in the core/clad region of the fiber can reach the step-index cladding interface. The second mechanism for light reaching the step-index interface is due to the fiber being bent.

Calculation has shown that the first of the above two mechanisms is particularly important for higher order modes of light transmission in the fiber. As a result, differential mode attenuation occurs and contributes significantly to the measured light attenuation described previously.

The subject invention also relates to a method to circumvent this extrinsic loss of light. In a specific embodiment, the subject invention can reduce or eliminate, the step-index clad/coat interface. Such a reduction or elimination, of the step-index clad/coat interface can be achieved by producing a profile, for example, as shown in Figure 15 (b). With this type of profile, the high order modes can be refracted back towards the axis of the fiber and rarely encounter the cladding/ coat interface even when the fiber is bent.

Three embodiments of this invention were previously described in which additive was added to:

The core only.
The cladding only.
Both the core and cladding materials.

The embodiment incorporating additives to both the core and cladding materials can be preferred for achieving high thermal stability (85˚C) and good optical transmission.

A schematic is shown in Figure 14(a) of the radial profile of the fiber immediately after extrusion for an embodiment in which additives only are added to the core. After additive diffusion, the graded index (GRIN) profile is shown in Figure 14(b). Radius $r_1$ is the core radius, $r_2$ is the outer radius of the clad layer, and $r_3$ is the outer radius of the coat layer. As stated previously this experimental profile is similar to that observed in LUCINA® (EP 1164393A2) fiber and that obtained by extrusion techniques described in U.S. Patent No. 6,254,808.

In another embodiment of the subject invention, an index-lowering additive is added to the coat polymer in

addition to the additives added to the core and cladding materials. A schematic is shown in Figure 15(a) of the radial profile of the fiber for this embodiment immediately after extrusion. After additive diffusion, the graded index (GRIN) profile is shown in Figure 15(b). This profile can result in optical attenuation < 10dB/km at a wavelength of 850 nm. In the embodiment shown in Figure 15(b) the shape of the GRIN profile in the core and clad region is a good approximation to a parabolic profile. This improved GRIN profile is achieved by the diffusion of the low index additive from the coat polymer into the clad polymer.

For a specified perfluorinated polymeric base material for core and cladding material and choices of additives selected as discussed previously, it is possible to choose the following processing variables to achieve an optimum refractive index profile:

1) Flow rates of (i) core extruder E-1

   (ii) clad extruder E-2
   (iii) coat extruder E-3

2) Diffusivity of the additives in the core, clad and coat polymers.
3) Temperature of the oven within which diffusion occurs.
4) Time interval that the fiber resides in the oven.

A finite element analysis using the above parameters can be used to predict the final refractive-index profile. In this way, the process may be tuned to achieve the desirable profile for maximum transmission bandwidth. This procedure avoids the need for substantial trial and error with the materials and processing conditions. This type of analysis has been described for the case of a single additive and a core/cladding co-extrusion system (Blyler, L. *et al.* US Patent No. 6,254,808). However, it is straight forward to extend the analysis to the proposed configuration of the subject invention.

The subject invention also relates to a method for achieving low light attenuation, in which the subject method involves annealing thermally or mechanically induced stress fluctuations in the optical material, as described earlier in the description of the fiber production process.

The fiber manufactured according to specific embodiments of the subject method can have a light attenuation versus wavelength as shown in Figure 16. The attenuation can be less than 10dB/km in the range 760-1250 nm. The theoretical calculation for the total attenuation of this type of fiber is also shown in Figure 16. The fluoropolymer theoretical attenuation is assumed to be the same as for CYTOP material. The very small amount of water that can be absorbed in the perfluorinated material is enough to produce strong absorption peaks due to O-H resonant vibrations. Between these absorption peaks three bands with good optical transmission can be identified, as shown in Table 5.

Table 5 - Wavelength ranges for optical transmission in the perfluorinated fiber produced according to this invention

| Band | Wavelength Range (nm) | Typical Attenuation dB/km |
|---|---|---|
| X | 760-900 | 7 |
| Y | 980-1100 | 3 |
| Z | 1180-1250 | 4 |

These transmission bands are well matched to the use of Course Wavelength Division Multiplexing (CWDM). A typical separation between individual transmission wavelengths is 20 nm in CWDM. Thus a total of at least sixteen and possibly twenty individual transmission wavelengths may be used for a given fiber.

The X-band is well matched to the use of vertical cavity surface emitting lasers (VCSELs) operating at 850 nm. The attenuation in this band is adequate for use in, Local Area Networks, Storage Area Networks and Central Offices.

The Y-band has the highest optical transmission. The band is well matched to use of VCSELs with the fiber over distances up to three kilometers.

The Z-band may also be used for long distance transmission using VCSEL transmitters.

In a specific embodiment, a graded-index fiber with optical absorption ≤ 10dB/km in the range 760 - 1250nm can be manufactured using the following materials and teachings:

The glass transition temperature of the polymer used for core and cladding should be ≥ 120˚C, preferably ≥ 130˚C, and more preferably ≥ 140˚C.

A refractive index raising additive in the core polymer with concentration ≥ 10% wt./wt., and more preferably ≥ 20%. The additive should have corresponding differences of refractive index with the polymer of < 0.1, and more

preferably ≤ 0.05.

A refractive index lowering additive in the cladding polymer with similar concentrations and negative differences of refractive index relative to the cladding polymer.

A refractive index lowering additive in the coating polymer. The refractive index of the additive may be comparable to the coat polymer.

The refractive-index profile should be made to vary continuously from the core to coat polymer radial regions.

The manufacturing process should effectively anneal thermally or mechanically induced stress in the fiber.

A further embodiment of the subject invention relates to a method of manufacturing fiber with a bandwidth*distance product of 10Gbps*300 meters. As discussed in the description of the prior art, LUCINA® fiber has a refractive index profile which deviates greatly from the desired parabolic behavior at large radius. This profile with its poor approximation to a parabola leads to a factor of three less bandwidth*distance product than desired. It is an object of this invention to teach a method of fiber manufacture which provides a near parabolic refractive index profile and the desired bandwidth*distance product of 10Gpbs*300m.

The refractive-index profile can be approximated by the conventional power law:

$$N(r) = N_{axis} \left[1 - \left(\frac{r}{r_2}\right)^g \Delta\right]$$

where

$$\Delta = \Delta N / N_{axis}$$

r is any value of the radius, $r_2$ is the outer value of the cladding radius as shown in Figure 15 (b) and g is the index exponent which controls the shape of the profile. As discussed earlier, the requirements on the index profile for good optical transmission are similar to those for good bit rate transmission. The parameters in the subject invention which control the index profile were discussed earlier.

Ishigure, T. *et al.* (2001) have calculated the optimum value of g (about 2.2) and the associated transmission bandwidth taking into account both modal dispersion and material dispersion. A VCSEL, with a 1.0 nm spectral width is assumed in the calculation. The result of the calculation is shown in Figure 17, which shows the potential bit rate for transmission through a 1 km perfluorinated GRIN POF fiber as a function of wavelength. It can be seen that in the relevant wavelength region of 760 nm to about 1250 nm, where the light attenuation is ≤ 10 dB/km, the bandwidth is in excess of 3 Gigabit per second over a distance of 1 km. A similar calculated result for multimode (MM) glass fiber is shown in Figure 17. Due to the greater glass material dispersion, there is a much narrower wavelength range within which high bit rate transmission can be achieved.

The subject invention also relates to a method of fiber manufacture, the characteristics of which are:
Optical absorption ≤ 10dB/km in the wavelength range 760 nm to 1250 nm.
Bandwidth*distance product equal to 10Gbps*300 meters or equivalently 3Gbps*1,000 meters.
A fiber which can be bent with a radius of curvature of 10mm with less than 0.5dB loss.

In a specific embodiment of the subject invention, jacketed Simplex cable can be produced. Figure 18 is a schematic showing the final annealed fiber of Figure 1 being transmitted by a crosshead die D2. An extruder E5 can provide a polymer stream that jackets the fiber. Examples of polymer jacket materials include polyethylene and polyvinyl chloride. Production rates of Simplex cable can be, for example, about 50 to about 500 meter per minute.

In another embodiment of the subject invention, the die D in Figure 1 can employ multiple concentric structures of the type shown in Figure 2. Multiple single POF can be simultaneously produced and each processed as described schematically in Figure 1. This embodiment can provide several thousand meters of Simplex cable per minute.

Another embodiment of the subject invention relates to the production of duplex cable as shown in Figure 19. In this embodiment, the die shown in Figure 2 can be modified to permit the simultaneous production of two plastic optical fibers each identical to an embodiment of the subject single fiber described heretofore. Figure 20 is a cross section view of a specific embodiment of the subject duplex cable. The POF are designated as F1 and F2 and are surrounded by jacket J. Strengthening fibers S1 and S2 can be incorporated in, for example, the crosshead die and are shown in Figure 20. Production rates of Duplex cable is in the range of about 50 to about 500 meters per minute can be achieved. The duplex cable may also be fabricated in the form of zip-cord which permits easy separation of the cable into separate fibers.

One embodiment of the invention is the simultaneous production of multiple Duplex cables in a manner similar to that described for multiple Simplex cables. A corresponding increase in production rate of Duplex cable may be achieved.

In a further embodiment of the invention, a ribbon cable of multiple POF may be produced. Figure 21 shows a cross section view of a ribbon cable containing eight POF, F1-F8, in addition to strengthening fibers S1 and S2. In this embodiment of the invention, the eight POF can be brought into precise relative alignment with respect to each other within a crosshead die. The typical distance between the axes of fibers is 250 $\pm$ 2 microns. Methods of making such ribbons are well known in the art of glass fiber ribbon manufacture. An advantage of the subject invention is that the eight individual fibers are produced simultaneously and formed into the final ribbon product in a continuous process at low cost relative to glass fiber ribbon cable.

In a further embodiment of the invention a two dimensional array of POF may be produced.

The subject invention is capable of making graded index plastic optical fiber from a variety of materials with a range of diameters and refractive index profiles. The product of the invention may be in the forms of Simplex, Duplex, and/or Ribbon cable.

The subject invention pertains to the manufacture of a polymeric optical cable with unique specifications. These specifications enable for the first time the economical deployment of optical fiber to the home (FTTM) over the "last mile".

The telecommunications Act of 1996 opened up competition in the delivery of communication access in the "last mile".

Telephone companies and, cable television operators are independently installing glass "Fiber to the Neighborhood". That glass fiber is being terminated at the "Remote Node" in the neighborhood. The neighborhood is defined in this context as that region containing all dwelling structures within a radius of about one mile. Not until the development of the <10 dB/km polymeric fiber of this invention was it possible to consider polymeric rather than glass fiber for use in this "last mile" application. The last mile to the home has been or is being connected with copper wire and/or coaxial copper cable but there is very little use of glass fiber due to cost. The fiber enabled by the subject invention can have low optical attenuation and high bandwidth and be field terminable. The subject cable can provide an easy to install, low cost alternative to the existing copper solutions of wire and coaxial cable.

There are at least three different architectures which have been discussed for implementing glass fiber in the last mile or equivalently in the Distribution Loop. Schematics of these three architectures are shown in Figures 22, 23 and 24. The architectures are known as 1) the Active Star, 2) the Passive Star (or Passive Optical Network - PON) and 3) the Wavelength Division Multiplexed Passive Optical Network (WDM PON). In all of these architectures voice, video and data can be delivered to the remote node. However, an economical solution has not been found up to the present time deploying optical fiber in the last mile or distribution loop.

The availability of the fiber produced according to the subject invention permits its use in the distribution loops identified in Figures 22, 23 and 24. In each of these architectures it is foreseen that the most likely bandwidth delivered to each home will be 100Mbps Fast Ethernet or 1Gbps Ethernet.

In the important case of deployment of FTTH in the urban environment the ease and low cost of field termination is vitally important since the number of terminations increases dramatically. A schematic of a possible WDM PON Distribution Loop in the urban environment is shown in Figure 24. Each wavelength in the shared feeder fiber is operated at 100 Mbps Fast Ethernet and is passively split/recombined into individual cables to each apartment in the building. In the tele/data/video com room in the building there will be several cable terminations per household and at least one such termination in the communications gateway in the apartment itself. The fact that the new polymeric optical cable of the subject invention can be terminated and connectorized at a fraction of the cost of glass optical cable is an important economic factor driving its use in the urban environment.

In another embodiment of the subject urban use of the subject cable an architecture employing a WDM PON as shown in Figure 24 can be used. However, in this case the shared feeder line transmits Gigabit Ethernet at each wavelength. The remote node provides Gigabit Ethernet at each wavelength transmitted over each of the polymeric optical cables in the distribution loop. In the communications room of the multi-dwelling building, a fiber may be connected to a switch which provides ten or more 100 Mbps ports each of which may be individually connected to an apartment. Alternatively, a higher level of service of 1Gbps may be directly connected to the apartment.

In a further embodiment of the subject invention, a Home Run Architecture can be used as shown in Figure 25. In a typical urban environment a dedicated fiber of the type of the subject invention is run for 2 kilometers from the Central Office directly to hi-rise buildings, A, B, & C. A fiber entering building A may be operated at 1 G Ethernet at each of the 20 wavelengths available through CWDM. In the basement communication room the single incoming fiber can provide a total of 200 ports each running 100 Mbps fast Ethernet to each of the apartments. Once more, a higher level of service of 1 Gbps is available on demand. Hi-rise building D may contain up to 400 apartments and may need two dedicated fibers to be run directly from the central office.

It may be noted from Figure 17 that the subject fiber can provide CWDM with 20 channels all operating at 1 GE over a distance of 2 kilometers. As can be seen in Figure 17, silica glass fiber is severely limited in this regard by

its much higher chromaticity. In summary, the subject fiber can provide new opportunities for low cost, high bandwidth communication access for the urban and suburban environments.

It will be apparent to anyone skilled in the art that the advent of the new manufacturing method of a specific embodiment of the subject invention can provide a polymeric optical cable with the following characteristics:

low attenuation permitting transmission over distances of a few kilometers,

ease of termination and low cost connectorization parts and transceivers,

several transmission windows within each of which coarse wavelengths division multiplexing (CWDM) may be employed,

offers a new approach to fulfilling the promise of the Telecommunications Act of 1996 in lowering communication costs for consumers,

offers low cost duplex cable with ease of termination for Local Area Networks and Storage Area Networks.

These and other modifications and variations to the present invention may be practiced by those of ordinary skill in the art, without departing from the spirit and scope of the present invention. In addition, it should be understood that aspects of the various embodiments might be interchanged either in whole or in part. Furthermore, those of ordinary skill in the art will appreciate that the foregoing description is by way of example only, and is not intended to limit the invention as described herein.

All patents, patent applications, provisional applications, and publications referred to or cited herein are incorporated by reference in their entirety, including all figures and tables, to the extent they are not inconsistent with the explicit teachings of this specification.

## Claims

**1.** A method of manufacturing a plastic optical transmission medium with a radially varying refractive index, comprising:

preparing a cylindrical volume having at least two concentric cylinders of prepolymeric material, wherein at least one of said at least two concentric cylinders of prepolymeric material comprises a diffusible additive which modifies the refractive index of said at least one of said at least two concentric cylinders of prepolymeric material;

surrounding said cylindrical volume with an outer tubing, wherein the outer tubing is concentric with the cylinderical volume, wherein said outer tubing comprises a polymeric material having a higher softening point temperature than the glass transition temperatures of any of said at least two concentric cylinders of prepolymeric material;

exposing the at least two concentric cylinders of prepolymer material to energy, wherein exposing the cylindrical volume to energy increases the molecular weight of the prepolymer material of the at least two concentric cylinders of prepolymeric material so as to transform the prepolymeric material to a polymeric material and produce a cylindrical volume having at least two concentric cylinders of polymeric material;

heating the cylindrical volume surrounded by the outer tubing to a temperature which is below the softening point temperature of the outer tubing and above all of the glass transition temperatures of the at least two concentric cylinders of material,

wherein such heating causes diffusion of the diffusible additive in the at least one of said at least two concentric cylinders of material, wherein such diffusion of the diffusible additive modifies the radial refractive index of said cylindrical volume.

**2.** The method according to claim 1, wherein preparing the cylindrical volume comprises :

providing a source of molten prepolymeric material corresponding to each of the at least two concentric cylinders, wherein the source of molten prepolymeric material corresponding to the at least one of said at least two concentric cylinders of prepolymeric material comprising a diffusible additive comprises the corresponding diffusible additive;

extruding the source of molten prepolymeric material corresponding to each of the at least two concentric cylinder via a corresponding at least two dies.

**3.** The method according to claim 1,
wherein exposing the at least two concentric cylinders of prepolymeric material to energy occurs after heating the cylindrical volume surrounded by the outer tubing.

**4.** The method according to claim 1,
wherein exposing the at least two concentric cylinders of prepolymeric material to energy occurs before heating the

cylindrical volume surrounded by the ourter tubing.

5. The method according to claim 1,
wherein exposing the at least two concentric cylinders of prepolymeric material to energy occurs while heating the cylindrical volume surrounded by the outer tubing.

6. The method according to claim 1,
wherein heating the cylindrical volume occurs during at least two periods of time,
wherein at least one of the at least two periods of time is before exposing the at least two concentric cylinders of prepolymeric material to energy and at least one other of the at least two periods of time is after exposing the at least two concentric cylinders of prepolymeric material to energy.

7. The method according to claim 1,
wherein exposing the at least two concentric cylinders of prepolymeric material to energy comprises exposing the at least two concentric cylinders of prepolymeric material to heat sufficient to increase the molecular weight of the prepolymeric material of the at least two concentric cylinders of prepolymeric material so as to transform the prepolymeric material to polymeric material.

8. The method according to claim 1,
wherein exposing the at least two concentric cylinders of prepolymeric material to energy comprises exposing the at least two concentric cylinders of prepolymeric material to one or more energy sources selected from the following group:

electromagnetic radiation, ionizing radiation, and ultra sound.

9. The method according to claim 1, further comprising :

annealing the cylindrical volume surrounded with the outer tubing.

10. The method according to claim 1, further comprising :

surrounding the cylindrical volume with a coating prior to surrounding the cylindrical volume with an outer tubing.

11. The method according to claim 10, wherien the coating comprises a polymeric material.

12. The method according to claim 1, wherein the diffusible additive is nonpolymerizing.

13. The method according to claim 1, wherein the at least two concentric cylinders of polymeric material comprise an inner cylinder of polymeric core material and an outer cylinder of polymeric cladding material.

14. The method according to claim 13, wherein the polymeric core material and the polymeric cladding material are Perfluorinated.

15. The method according to claim 13, wherein said inner cylinder of polymeric core material comprises a diffusible additive which raises the index of refraction of said inner cylinder of polymeric material.

16. The method according to claim 13, wherein the polymeric core material and the polymeric cladding material are Perfluorinated with the addition of chlorine substituents.

17. The method according to claim 13, wherein the polymeric core material and the polymeric cladding material are the same material.

18. The method according to claim 13, wherein the polymeric core material and the polymeric cladding material are different materials.

19. The method according to claim 10, wherein the at least two concentric cylinders of polymeric material comprise an inner cylinder of polymeric core material and an outer cylinder of polymeric cladding material, wherein the polymeric core material and the polymeric cladding material are partially fluorinated and the polymeric coating material is

perfluorinated.

**20.** The method according to claim 13, wherein the polymeric core material and the polymeric cladding material are organic.

**21.** The method according to claim 10, wherein the at least two concentric cylinders of polymeric material of the modified cylindrical volume comprise an inner cylinder of polymeric core material and an outer cylinder of polymeric cladding material, wherein the polymeric core material and the polymeric cladding material are organic and the polymeric coating material is partially fluorinated.

**22.** The method according to claim 10, wherein the at least two concentric cylinders of polymeric material of the modified cylindrical volume comprise an inner cylinder of polymeric core material and an outer cylinder of polymeric cladding material, wherein the polymeric core material and the polymeric cladding material are organic and the polymeric coating material is perfluorinated.

**23.** The method according to claim 13, wherein the glass transition temperatures of the polymeric core material and the prepolymeric cladding material are in the range from about 108˚C to about 335˚C.

**24.** The method according to claim 13, wherein the glass transition temperatures of the polymeric core material and the polymeric cladding material are in the range from about 120˚C to about 150˚C.

**25.** The method according to claim 13, wherein the refractive indices of the polymeric core material and the polymeric cladding material are greater than about 1.31.

**26.** The method according to claim 13 wherein the refractive indices of the polymeric core material and the polymeric cladding material are greater than about 1.32 and less than about 1.38

**27.** The method according to claim 13, wherein the inner cylinder of polymeric core material comprises the diffusible additive, wherein the difference in refractive index between the polymeric core material and the diffusible additive is less than about 0.25.

**28.** The method according to claim 13, wherein the inner cylinder of polymeric core material comprises the diffusible additive, wherein the difference in refractive index between the polymeric core material and the diffusible additive is less than about 0.15.

**29.** The method according to claim 13, wherein the inner cylinder of polymeric core material comprises the diffusible additive, wherein the difference in refractive index between the polymeric core material and the diffusible additive is less than about 0.075.

**30.** The method according to claim 13, wherein the outer cylinder polymeric cladding material comprises the diffusible additive, wherein the difference in refractive index between the polymeric cladding material and the diffusible additive is less than about 0.25.

**31.** The method according to claim 13, wherein the outer cylinder of polymeric cladding material comprises the diffusible additive, wherein the difference in refractive index between the polymeric cladding material and the diffusible additive is less than about 0.15.

**32.** The method according to claim 13, wherein the outer cylinder of polymeric cladding material comprises the diffusible additive, wherein the difference in refractive index between the polymeric cladding material and the diffusible additive is less than about 0.075.

**33.** The method according to claim 11, wherein the at least two concentric cylinders of polymeric material comprise an inner cylinder of polymeric core material and an outer cylinder of polymeric cladding material, wherein the refractive index of the coating polymer material is lower than that of the outside surface of the polymeric cladding material by at least about 0.005.

**34.** The method according to claim 11, wherein the at least two concentric cylinders of polymeric material comprise an inner cylinder of polymeric core material and an outer cylinder of polymeric cladding material, wherein the refractive

index of the coating polymer material is lower than that of the outside surface of the polymeric cladding material by at least about 0.015.

**35.** The method according to claim 11, wherein the at least two concentric cylinders of polymeric material comprise an inner cylinder of polymeric core material and an outer cylinder of polymeric cladding material, wherein the refractive index of the coating polymer material is lower than that of the outside surface of the polymeric cladding material by at least about 0.03.

**36.** The method according to claim 13, wherein during preparing the cylindrical volume the prepolymeric core material and the prepolymeric cladding material are maintained at a temperature of less than about 225˚C.

**37.** The method according to claim 13, wherein during preparing the cylindrical volume the prepolymeric core material and the prepolymeric cladding material are maintained at a temperature of less than about 175˚C.

**38.** The method according to claim 13, wherein during preparing the cylindrical volume the prepolymeric core material and the prepolymeric cladding material are maintained at a temperature of less than about 150˚C.

**39.** The method according to claim 11, wherein during surrounding the cylindrical volume with a coating, the polymeric coating material is maintained at a temperature of less than about 250˚C.

**40.** The method according to claim 1, wherein the outer tubing material retains its structural mechanical properties up to a temperature of at least about 175˚C.

**41.** The method according to claim 1, wherein the outer tubing material retains its structural mechanical properties up to a temperature of at least about 200˚C.

**42.** The method according to claim 11, wherein the at least two concentric cylinders of polymeric material comprise an inner cylinder of polymeric core material and an outer cylinder of polymeric cladding material, wherein the prepolymeric core material is directed to enter a die, the prepolymer cladding material, coating material, and outer tubing material enter cross-head dies within the die and a four component extrudate fiber is drawn from the die.

**43.** The method according to claim 1, wherein heating the cylindrical volume surrounded by the outer tubing comprises encircling the cylindrical volume surrounded by the outer tubing on a rotating drum located within a heated oven having a temperature is in the range of about 125˚C to about 200˚C.

**44.** The method according to claim 43, wherein the cylindrical volume surrounded by the outer tubing is exposed to energy within the oven.

**45.** The method according to claim 9, wherein annealing the cylindrical volume surrounded by the outer tube comprises encircling the cylindrical volume surrounded by the outer tubing on a rotating drum in an oven for a time period to reduce residual stress within the light transmitting polymeric material.

**46.** The method according to claim 9, wherein the radial temperature difference between the axis of the cylindrical volume and the outer tubing is maintained at less than about 6˚C during the time the temperature of the cylindrical volume surrounded by the outer tubing falls to room temperature.

**47.** The method according to claim 9, wherein the radial temperature difference between the axis of the cylindrical volume and the outer tubing is maintained at less than about 3˚C during the time the temperature of the cylindrical volume surrounded by the outer tubing falls to room temperature.

**48.** The method according to claim 45, wherein heating the cylindrical volume surrounded by the outer tube is performed in the oven.

**49.** The method according to claim 1, wherein the flexibility of the cylindrical volume surrounded by the outer tubing is increased by stretching the cylindrical volume surrounded by the outer tubing by a ratio between about 1.5 and about 4.0 at a minimum temperature permitted by the outer tubing material.

**50.** The method of claim 1, wherein the plastic optical transmission medium has an optical attenuation of less than 20

dB/km at 850 nm wavelength.

**51.** The method of claim 1, wherein the plastic optical transmission medium has an optical attenuation of less than 10 dB/km at 850 nm wavelength.

**52.** The method of claim 1, wherein the plastic optical transmission medium has an optical attenuation of less than 7 dB/km at 850 nm wavelength.

**53.** The method of claim 1, wherein the plastic optical transmission medium is graded-index plastic optical fiber.

**54.** The method of claim 1, further comprising:

jacketing the cylindrical volume surrounded by the outer tubing to produce simplex cable.

**55.** The method of claim 1, further comprising:

repeating the steps of preparing, surrounding, exposing, and heating to produce at least one additional cylindrical volume surrounded by a corresponding at least one additional outer tubing, wherein each repeated step is performed essentially simultaneously with the corresponding step.

**56.** The method of claim 55, further comprising:

jacketing the cylindrical volume surrounded by the outer tubing and one of the at least one additional cylindrical volume surrounded by a corresponding at least one additional outer tubing to produce a duplex cable.

**57.** The method of claim 55, further comprising:

jacketing the cylindrical volume surrounded by the outer tubing and seven of the at least one additional cylindrical volume surrounded by a corresponding at least one additional outer tubing to produce a ribbon cable.

**58.** The method according to claim 55, further comprising:

jacketing the cylindrical volume surrounded by the outer tubing and the at least one additional cylindrical volume surrounded by a corresponding at least one additional outer tubing to produce a multi-fiber cable.

**59.** A method of manufacturing a plastic optical transmission medium with a radially varying refractive index, comprising:

preparing a cylindrical volume having at least two concentric cylinders of prepolymeric material;
surrounding said cylindrical volume with an outer tubing, wherein the outer tubing is concentric with the cylinderical volume, wherein said outer tubing comprises a polymeric material having a higher softening point temperature than the glass transition temperatures of any of said at least two concentric cylinders of prepolymeric material; and
exposing the at least two concentric cylinders of prepolymer material to energy, wherein exposing the cylindrical volume to energy increases the molecular weight of the prepolymer material of the at least two concentric cylinders of prepolymeric material so as to transform the prepolymeric material to a polymeric material and produce a cylindrical volume having at least two concentric cylinders of polymeric material;

wherein the plastic optical transmission medium is a step-index plastic optical fiber.

## Patentansprüche

**1.** Verfahren zur Herstellung eines plastischen optischen Übertragungsmediums mit einem radial variierenden refraktiven Index, umfassend:

Präparieren eines zylindrischen Volumens, das mindestens zwei konzentrische Zylinder aus Präpolymer-Material aufweist, wobei mindestens einer der mindestens zwei konzentrischen Zylinder aus Präpolymer-Material ein diffusionsfähigen Zusatzstoff umfasst, der den refraktiven Index des mindestens einen der mindestens zwei

konzentrischen Zylinder aus Präpolymer-Material verändert;
Umgeben des zylindrischen Volumens mit einer äußeren Röhre, wobei die äußere Röhre konzentrisch mit dem zylindrischen Volumen ist, wobei die äußere Röhre ein Polymer-Material umfasst, das eine höhere Erweichungspunkt-Temperatur als die Glas-Übergangstemperaturen irgend eines der mindestens zwei konzentrischen Zylinder aus Präpolymer-Material aufweist;
Aussetzen der mindestens zwei konzentrischen Zylinder aus Präpolymer-Material gegenüber Energie, wobei das Aussetzen des zylindrischen Volumens gegenüber Energie das Molekulargewicht des Präpolymer-Materials der mindestens zwei konzentrischen Zylinder aus Präpolymer-Material erhöht, um so das Präpolymer-Material ein Polymer-Material zu transformieren und ein zylindrisches Volumen herzustellen, das mindestens zwei konzentrischen Zylinder an Polymer-Material aufweist;
Erhitzen des zylindrischen Volumens, das von der äußeren Röhre umgeben ist, auf eine Temperatur die unterhalb der Erweichungspunkt-Temperatur der äußeren Röhre und oberhalb aller der Glas-Übergangstemperaturen der mindestens zwei konzentrischen Zylinder aus Material liegt, wobei dieses Erhitzen eine Diffusion des diffusionsfähigen Zusatzstoffes in mindestens einem der mindestens zwei konzentrischen Zylinder aus Material verursacht, wobei diese Diffusion des diffusionsfähigen Zusatzstoffes den radialen refraktiven Index des zylindrisches Volumens modifiziert.

**2.** Verfahren nach Anspruch 1, wobei Präparieren des zylindrischen Volumens umfasst:

Zur Verfügung stellen eines geschmolzenen Präpolymer-Materials, das jedem der mindestens zwei konzentrischen Zylinder entspricht, wobei die Quelle von geschmolzenem Präpolymer-Material mindestens einem der mindestens zwei konzentrischen Zylinder aus Präpolymer-Material umfassend einen diffusionsfähigen Zusatzstoff entspricht, das den entsprechenden diffusionsfähigen Zusatzstoff umfasst,
Extrudieren der Quelle von geschmolzenem Präpolymer-Material das jedem der mindestens zwei konzentrischen Zylinder entspricht über eine entsprechende mindestens zwei Presskörper.

**3.** Verfahren nach Anspruch 1, wobei das Aussetzen der mindestens zwei konzentrischen Zylinder aus Präpolymer-Material gegenüber Energie nach einem Erhitzen des zylindrischen Volumens, das von der äußeren Röhre umgeben ist, stattfindet.

**4.** Verfahren nach Anspruch 1, wobei das Aussetzen der mindestens zwei konzentrischen Zylinder aus Präpolymer-Material gegenüber Energie vor dem Erhitzen des zylindrischen Volumens, das von der äußeren Röhre umgeben ist, stattfindet.

**5.** Verfahren nach Anspruch1, wobei das Aussetzen der mindestens zwei konzentrischen Zylinder aus Präpolymer-Material gegenüber Energie während dem Erhitzen des zylindrischen Volumens, das von der äußeren Röhre umgeben ist, stattfindet.

**6.** Verfahren nach Anspruch 1, wobei das Erhitzen des zylindrischen Volumens während mindestens zwei Zeitdauern stattfindet, wobei mindestens eine der mindestens zwei Zeitdauern vor dem Aussetzen der mindestens zwei konzentrischen Zylinder aus Präpolymer-Material gegenüber Energie liegt und mindestens eine weitere der mindestens zwei Zeitdauern nach dem Aussetzen der mindestens zwei konzentrischen Zylinder aus Präpolymer-Material gegenüber Energie liegt.

**7.** Verfahren nach Anspruch 1, wobei das Aussetzen der mindestens zwei konzentrischen Zylinder aus Präpolymer-Material gegenüber Energie ein Aussetzen der mindestens zwei konzentrischen Zylinder aus Präpolymer-Material gegenüber ausreichender Hitze umfasst, um das Molekulargewicht des Präpolymer-Materials der mindestens zwei konzentrischen Zylinder aus Präpolymer-Material zu erhöhen, um so das Präpolymer-Material zu Polymer-Material zu transformieren.

**8.** Verfahren nach Anspruch 1, wobei das Aussetzen der mindestens zwei konzentrischen Zylinder aus Präpolymer-Material gegenüber Energie ein Aussetzen der mindestens zwei konzentrischen Zylinder aus Präpolymer-Material gegenüber einer oder mehrere Energiequellen ausgewählt aus der folgenden Gruppe umfasst: Elektromagnetische Strahlung, ionisierende Strahlung und Ultraschall.

**9.** Verfahren nach Anspruch 1, weiter umfassend: Anheften des umgebenen zylindrischen Volumens mit der äußeren Röhre.

10. Verfahren nach Anspruch 1, weiter umfassend: Umgeben des zylindrischen Volumens mit einer Beschichtung vor dem Umgeben des zylindrischen Volumens mit einer äußeren Röhre.

11. Verfahren nach Anspruch 10, wobei die Beschichtung ein Polymer- Material umfasst.

12. Verfahren nach Anspruch 1, wobei der diffusionsfähige Zusatzstoff nicht-polymerisierend ist.

13. Verfahren nach Anspruch 1, wobei die mindestens zwei konzentrischen Zylinder aus Polymer-Material einen inneren Zylinder aus Polymer-Kernmaterial und einen äußeren Zylinder aus Polymer-Umhüllungmaterial umfassen.

14. Verfahren nach Anspruch 13, wobei das Polymer-Kernmaterial und das Polymer-Umhüllungsmaterial perfluoriert sind.

15. Verfahren nach Anspruch 13, wobei der innere Zylinder aus Polymer-Kernmaterial einen diffusionsfähigen Zusatzstoff umfasst, der den refraktiven Index des inneren Zylinders aus Polymer-Material erhöht.

16. Verfahren nach Anspruch 13, wobei das Polymer-Kernmaterial und das Polymer-Umhüllungsmaterial durch die Addition von Chlorsubstituenten perfluoriert sind.

17. Verfahren nach Anspruch 13, wobei das Polymer-Kernmaterial und das Polymer-Umhüllungsmaterial dasselbe sind.

18. Verfahren nach Anspruch 13, wobei das Polymer-Kernmaterial und das Polymer-Umhüllungsmaterial verschiedene Materialien sind.

19. Verfahren nach Anspruch 10, wobei die mindestens zwei konzentrischen Zylinder aus Polymer-Material einen inneren Zylinder aus Polymer-Kernmaterial und an äußeren Zylinder aus Polymer-Umhüllungsmaterial umfassen, wobei das Polymer-Kernmaterial und das Polymer-Umhüllungsmaterial teilweise fluoriert sind und das Polymer-Beschichtungsmaterial perfluoriert ist.

20. Verfahren nach Anspruch 13, wobei das Polymer-Kernmaterial und das Polymer-Umhüllungsmaterial organisch sind.

21. Verfahren nach Anspruch 10, wobei die mindestens zwei konzentrischen Zylinder aus Polymer-Material des modifizierten zylindrischen Volumens einen inneren Zylinder aus Polymer-Kernmaterial und einen äußeren Zylinder aus Polymer-Umhüllungsmaterial umfassen, wobei das Polymer-Kernmaterial und das Polymer-Umhüllungsmaterial organisch sind und das Polymer-Beschichtungsmaterial teilweise fluoriert ist.

22. Verfahren nach Anspruch 10, wobei die mindestens zwei konzentrischen Zylinder aus Polymer-Material des modifizierten zylindrischen Volumens einen inneren Zylinder aus Polymer-Kernmaterial und einen äußeren Zylinder aus Polymer-Umhüllungsmaterial umfassen, wobei das Polymer-Kernmaterial und das Polymer-Umhüllungsmaterial organisch sind und das Polymer-Beschichtungsmaterial perfluoriert ist.

23. Verfahren nach Anspruch 13, wobei die Glas-Übergangstemperaturen des Polymer-Kernmaterials und des Präpolymer-Umhüllungsmaterials im Bereich von ungefähr 108˚C bis ungefähr 335˚C liegen.

24. Verfahren nach to Anspruch 13, wobei die Glas-Übergangstemperaturen des Polymer-Kernmaterials und des Polymer-Umhüllungsmaterials im Bereich von ungefähr 120˚C bis ungefähr 150˚C liegen.

25. Verfahren nach Anspruch 13, wobei die refraktiven Indices des Polymer-Kernmaterials und des Polymer- Umhüllungsmaterials größer als ungefähr 1,31 sind.

26. Verfahren nach Anspruch 13 wobei die refraktiven Indices des Polymer-Kernmaterials und des Polymer-Umhüllungsmaterials größer als ungefähr 1,32 und kleiner als ungefähr 1,38 sind.

27. Verfahren nach Anspruch 13, wobei der innere Zylinder aus Polymer-Kernmaterial den diffusionsfähigen Zusatzstoff umfasst, wobei der Unterschied in refraktivem Index zwischen dem Polymer-Kernmaterial und dem diffusionsfähigen Zusatzstoff kleiner als ungefähr 0,25 ist.

**28.** Verfahren nach Anspruch 13, wobei der innere Zylinder aus Polymer-Kernmaterial den diffusionsfähigen Zusatzstoff umfasst, wobei der Unterschied in refraktivem Index zwischen dem Polymer-Kernmaterial und dem diffusionsfähigen Zusatzstoff kleiner als ungefähr 0,15 ist.

**29.** Verfahren nach Anspruch 13, wobei der innere Zylinder aus Polymer-Kernmaterial den diffusionsfähigen Zusatzstoff umfasst, wobei der Unterschied in refraktivem Index zwischen dem Polymer-Kernmaterial und dem diffusionsfähigen Zusatzstoff kleiner als ungefähr 0,075 ist.

**30.** Verfahren nach Anspruch 13, wobei das äußere Zylinder aus Polymer-Umhüllungsmaterial den diffusionsfähigen Zusatzstoff umfasst, wobei der Unterschied in refraktivem Index zwischen dem Polymer-Umhüllungsmaterial und dem diffusionsfähigen Zusatzstoff kleiner als ungefähr 0.25 ist.

**31.** Verfahren nach Anspruch 13, wobei der äußere Zylinder aus Polymer-Umhüllungsmaterial den diffusionsfähigen Zusatzstoff umfasst, wobei der Unterschied in refraktivem Index zwischen dem Polymer-Umhüllungsmaterial und dem diffusionsfähigen Zusatzstoff kleiner als ungefähr 0,15 ist.

**32.** Verfahren nach Anspruch 13, wobei der äußere Zylinder aus Polymer-Umhüllungsmaterial den diffusionsfähigen Zusatzstoff umfasst, wobei der Unterschied in refraktivem Index zwischen dem Polymer-Umhüllungsmaterial und dem diffusionsfähigen Zusatzstoff kleiner als ungefähr 0,075 ist.

**33.** Verfahren nach Anspruch 11, wobei die mindestens zwei konzentrischen Zylinder aus Polymer-Material einen inneren Zylinder aus Polymer-Kernmaterial und einen äußeren Zylinder aus Polymer-Umhüllungsmaterial umfassen, wobei der refraktive Index des Beschichtungs-Polymermaterials um mindestens ungefähr 0,005 kleiner ist, als der der äußeren Oberfläche des Polymer-Umhüllungsmaterials.

**34.** Verfahren nach to Anspruch 11, wobei die mindestens zwei konzentrischen Zylinder aus Polymer-Material einen inneren Zylinder aus Polymer-Kernmaterial und einen äußeren Zylinder aus Polymer-Umhüllungsmaterial umfassen, wobei der refraktive Index des Beschichtungs-Polymermaterials um mindestens ungefähr 0,015 kleiner ist, als der der äußeren Oberfläche des Polymer-Umhüllungsmaterials.

**35.** Verfahren nach Anspruch 11, wobei die mindestens zwei konzentrischen Zylinder aus Polymer-Material einen inneren Zylinder aus Polymer-Kernmaterial und einen äußeren Zylinder aus Polymer-Umhüllungsmaterial umfassen, wobei der refraktive Index des Beschichtungs-Polymermaterials um mindestens ungefähr 0,03 kleiner ist, als der der äußeren Oberfläche des Polymer-Umhüllungsmaterials.

**36.** Verfahren nach Anspruch 13, wobei während der Präparation des zylindrischen Volumens das Präpolymer-Kernmaterial und das Präpolymer-Umhüllungsmaterial bei einer Temperatur von weniger als ungefähr 225˚C gehalten werden.

**37.** Verfahren nach Anspruch 13, wobei während der Präparation des zylindrischen Volumens das Präpolymer-Kernmaterial und das Präpolymer-Umhüllungsmaterial bei einer Temperatur von weniger als ungefähr 175˚C gehalten werden

**38.** Verfahren nach Anspruch 13, wobei während der Präparation des zylindrischen Volumens das Präpolymer-Kernmaterial und das Präpolymer-Umhüllungsmaterial bei einer Temperatur von weniger als ungefähr 150˚C gehalten werden.

**39.** Verfahren nach Anspruch 11, wobei während des Umgebens des zylindrischen Volumens mit einer Beschichtung das Polymer-Beschichtungsmaterial bei einer Temperatur von weniger als ungefähr 250˚C gehalten wird.

**40.** Verfahren nach Anspruch 1, wobei das äußere Röhrenmaterial seine strukturellen mechanischen Eigenschaften bis zu einer Temperatur von mindestens ungefähr 175˚C beibehält.

**41.** Verfahren nach Anspruch 1, wobei das äußere Röhrenmaterial seine strukturellen mechanischen Eigenschaften bis zu einer Temperatur von mindestens ungefähr 200˚C beibehält.

**42.** Verfahren nach Anspruch 11, wobei die mindestens zwei konzentrischen Zylinder aus Polymer-Material einen inneren Zylinder aus Polymer-Kernmaterial und einen äußeren Zylinder aus Polymer-Umhüllungsmaterial umfassen,

wobei das präpolymere Kernmaterial so geleitet wird, das es in eine Pressform eintritt, das präpolymere Umhüllungsmaterial, das Beschichtungsmaterial, und äußere Röhre-Material treten in cross-head Pressformen innerhalb der Pressform ein und eine Vier-Komponenten-Extrudat-Faser aus der Pressform abgezogen wird.

**43.** Verfahren nach Anspruch 1, wobei das Erhitzen des zylindrischen Volumens, das durch die äußere Röhre umgeben ist, ein Einkreiseln des zylindrischen Volumens, das durch die äußere Röhre umgeben ist, auf einer rotierenden Trommel umfasst, die innerhalb eines beheizten Ofens, der eine Temperatur im Bereich von ungefähr 125˚C bis ungefähr 200˚C aufweist, lokalisiert ist.

**44.** Verfahren nach Anspruch 43, wobei das zylindrische Volumen, das durch die äußere Röhre umgeben ist, innerhalb des Ofens gegenüber Energie ausgesetzt wird.

**45.** Verfahren nach Anspruch 9, wobei ein Anheften des zylindrischen Volumens, das durch die äußere Röhre umgeben ist, ein Einkreiseln des zylindrischen Volumens, das durch die äußere Röhre umgeben ist, auf einer rotierenden Trommel in einem Ofen für eine Zeitdauer umfasst, um restliche Spannung innerhalb des Licht-übertragenden Polymer-Materials zu verringern.

**46.** Verfahren nach Anspruch 9, wobei der radiale Temperaturunterschied zwischen der Achse des zylindrischen Volumens und der äußeren Röhre, während der Zeit, bei der die Temperatur des zylindrischen Volumens, das durch die äußere Röhre umgeben ist, auf Raumtemperatur abfällt, auf weniger als ungefähr 6˚C gehalten wird.

**47.** Verfahren nach Anspruch 9, wobei der radiale Temperaturunterschied zwischen der Achse des zylindrischen Volumens und der äußeren Röhre, während der Zeit, bei der die Temperatur des zylindrischen Volumens, das durch die äußere Röhre umgeben ist, auf Raumtemperatur abfällt, auf weniger als ungefähr 3˚C gehalten wird.

**48.** Verfahren nach Anspruch 45, wobei das Erhitzen des zylindrischen Volumens, das durch die äußere Röhre umgeben ist, in dem Ofen durchgeführt wird.

**49.** Verfahren nach Anspruch 1, wobei die Flexibilität des zylindrischen Volumens, das durch die äußere Röhre umgeben ist, durch Strecken des zylindrischen Volumens, das durch die äußere Röhre umgeben ist, um ein Verhältnis von zwischen ungefähr 1,5 und ungefähr 4,0 bei einer minimalen Temperatur, die durch das Material der äußeren Röhre gestattet wird, erhöht wird.

**50.** Verfahren nach Anspruch 1, wobei das plastische optische Übertragungsmedium eine optische Abschwächung von weniger als 20dB/km bei 850 nm Wellenlänge aufweist.

**51.** Verfahren nach Anspruch 1, wobei das plastische optische Übertragungsmedium eine optische Abschwächung von weniger als 10 dB/km bei 850 nm Wellenlänge aufweist.

**52.** Verfahren nach Anspruch 1, wobei das plastische optische Übertragungsmedium eine optische Abschwächung von weniger als 7 dB/km bei 850 nm Wellenlänge aufweist.

**53.** Verfahren nach Anspruch 1, wobei das plastische optische Übertragungsmedium eine Stufen-Index plastische optische Faser ist.

**54.** Verfahren nach Anspruch 1, weiter umfassend: Umhüllen des zylindrischen Volumens, das durch die äußere Röhre umgeben ist, um ein Simplexkabel herzustellen.

**55.** Verfahren nach Anspruch 1, weiter umfassend: Wiederholen der Schritte von Präparieren, Umgeben, Aussetzen und Erhitzen, um mindestens ein zusätzliches zylindrisches Volumen, umgeben durch eine entsprechende mindestens eine zusätzliche äußere Röhre, herzustellen, wobei jeder wiederholte Schritt im wesentlichen gleichzeitig mit dem entsprechenden Schritt durchgeführt wird.

**56.** Verfahren nach Anspruch 55, weiter umfassend: Umhüllen des zylindrischen Volumens, das durch die äußere Röhre umgeben ist, und eines der mindestens einen zusätzlichen zylindrischen Volumen, das durch eine entsprechende mindestens eine zusätzliche äußere Röhre umgeben ist, um ein Duplexkabel herzustellen.

**57.** Verfahren nach Anspruch 55, weiter umfassend: Umhüllen des zylindrischen Volumens, das durch die äußere Röhre

umgeben ist, und sieben der mindestens einen zusätzlichen zylindrischen Volumen, das durch eine entsprechende mindestens eine zusätzliche äußere Röhre umgeben ist, um ein Flachbandkabel herzustellen.

**58.** Verfahren nach Anspruch 55, weiter umfassend: Umhüllen des zylindrischen Volumens, das durch die äußere Röhre umgeben ist, und dem mindestens einen zusätzlichen zylindrischen Volumen, das durch eine entsprechende mindestens eine zusätzliche äußere Röhre umgeben ist, um ein Multifaserkabel herzustellen.

**59.** Verfahren zur Herstellung eines plastischen optischen Übertragungsmediums mit einem radial variierenden refraktiven Index, umfassend:

Präparieren eines zylindrischen Volumens, das mindestens zwei konzentrischen Zylinder aus Präpolymer-Material aufweist;
Umgeben des zylindrischen Volumens mit einer äußeren Röhre, wobei die äußere Röhre konzentrisch mit dem zylindrischen Volumen ist, wobei die äußere Röhre ein Polymer-Material mit einer höheren Erweichungspunkt-Temperatur umfasst als die Glasübergangstemperaturen jedes der mindestens zwei konzentrischen Zylinder aus Präpolymer-Material; und
Aussetzen der mindestens zwei konzentrischen Zylinder aus Präpolymer-Material gegenüber Energie, wobei das Aussetzen des zylindrischen Volumens gegenüber Energie das Molekulargewicht des Präpolymer-Materials der mindestens zwei konzentrischen Zylinder aus Präpolymer-Material erhöht, um so das Präpolymer-Material in ein Polymer-Material zu transformieren und ein zylindrisches Volumen herzustellen, das mindestens zwei konzentrische Zylinder aus Polymer-Material aufweist; wobei das plastische optische Übertragungsmedium eine Stufenindex plastische optische Faser ist.

## Revendications

**1.** Procédé de fabrication d'un support de transmission optique en plastique avec un indice de réfraction variant de façon radiale, comprenant les étapes consistant à :

préparer un volume cylindrique ayant au moins deux cylindres concentriques de matériau prépolymère, dans lequel au moins un desdits au moins deux cylindres concentriques de matériau prépolymère comprend un additif diffusible qui modifie l'indice de réfraction dudit au moins un desdits au moins deux cylindres concentriques de matériau prépolymère ;
entourer ledit volume cylindrique avec un tubage extérieur, dans lequel le tubage extérieur est concentrique avec le volume cylindrique, dans lequel ledit tubage extérieur comprend un matériau polymère ayant une température de point de ramollissement inférieure aux températures de transition vitreuse de l'un quelconque desdits au moins deux cylindres concentriques de matériau prépolymère ;
exposer les au moins deux cylindres concentriques de matériau prépolymère à de l'énergie, dans lequel le fait d'exposer le volume cylindrique à de l'énergie augmente le poids moléculaire de matériau prépolymère des au moins deux cylindres concentriques de matériau prépolymère afin de transformer le matériau prépolymère en un matériau polymère et produire un volume cylindrique ayant au moins deux cylindres concentriques de matériau polymère ;
chauffer le volume cylindrique entouré par le tubage extérieur jusqu'à une température qui est inférieure à la température de point de ramollissement de tubage extérieur et supérieure à toutes les températures de transition vitreuse des au moins deux cylindres concentriques de matériau, dans lequel un tel chauffage entraîne la diffusion de l'additif diffusible dans l'au moins un desdits au moins deux cylindres concentriques de matériau, dans lequel une telle diffusion de l'additif diffusible modifie l'indice de réfraction radiale dudit volume cylindrique.

**2.** Procédé selon la revendication 1, dans lequel l'étape consistant à préparer le volume cylindrique comprend les étapes consistant à :

fournir une source de matériau polymère fondu correspondant à chacun des au moins deux cylindres concentriques, dans lequel la source de matériau polymère fondu correspondant à l'au moins un desdits au moins deux cylindres concentriques de matériau prépolymère comprenant un additif diffusible comprend l'additif diffusible correspondant ;
extruder la source de matériau polymère fondu correspondant à chacun des au moins deux cylindres concentriques par l'intermédiaire d'au moins deux filières correspondantes.

3. Procédé selon la revendication 1, dans lequel l'étape consistant à exposer les au moins deux cylindres concentriques de matériau prépolymère à de l'énergie a lieu après l'étape consistant à chauffer le volume cylindrique entouré par le tubage extérieur.

4. Procédé selon la revendication 1, dans lequel l'étape consistant à exposer les au moins deux cylindres concentriques de matériau prépolymère à de l'énergie a lieu avant l'étape consistant à chauffer le volume cylindrique entouré par le tubage extérieur.

5. Procédé selon la revendication 1, dans lequel l'étape consistant à exposer les au moins deux cylindres concentriques de matériau prépolymère à de l'énergie a lieu durant l'étape consistant à chauffer le volume cylindrique entouré par le tubage extérieur.

6. Procédé selon la revendication 1, dans lequel l'étape consistant à chauffer le volume cylindrique a lieu durant au moins deux périodes, dans lequel au moins une des au moins deux périodes est avant l'étape consistant à exposer les au moins deux cylindres concentriques de matériau prépolymère à de l'énergie et au moins une autre des au moins deux périodes est après l'étape consistant à exposer les au moins deux cylindres concentriques de matériau prépolymère à de l'énergie.

7. Procédé selon la revendication 1, dans lequel l'étape consistant à exposer les au moins deux cylindres concentriques de matériau prépolymère à de l'énergie comprend le fait d'exposer les au moins deux cylindres concentriques de matériau prépolymère à une chaleur suffisante pour augmenter le poids moléculaire de matériau prépolymère des au moins deux cylindres concentriques de matériau prépolymère afin de transformer le matériau prépolymère en matériau polymère.

8. Procédé selon la revendication 1, dans lequel l'étape consistant à exposer les au moins deux cylindres concentriques de matériau prépolymère à de l'énergie comprend le fait d'exposer les au moins deux cylindres concentriques de matériau prépolymère à une ou plusieurs sources d'énergie sélectionnée(s) parmi le groupe suivant : rayonnement électromagnétique, rayonnement ionisant, et ultrason.

9. Procédé selon la revendication 1, comprenant en outre l'étape consistant à recuire le volume cylindrique entouré avec le tubage extérieur.

10. Procédé selon la revendication 1, comprenant en outre l'étape consistant à entourer le volume cylindrique avec un revêtement avant d'entourer le volume cylindrique avec un tubage extérieur.

11. Procédé selon la revendication 10, dans lequel le revêtement comprend un matériau polymère.

12. Procédé selon la revendication 1, dans lequel l'additif diffusible est non polymérisant.

13. Procédé selon la revendication 1, dans lequel les au moins deux cylindres concentriques de matériau polymère comprennent un cylindre intérieur de matériau d'âme polymère et un cylindre extérieur de matériau de gainage polymère.

14. Procédé selon la revendication 13, dans lequel le matériau d'âme polymère et le matériau de gainage polymère sont perfluorés.

15. Procédé selon la revendication 13, dans lequel ledit cylindre intérieur de matériau d'âme polymère comprend un additif diffusible qui augmente l'indice de réfraction dudit cylindre intérieur de matériau polymère.

16. Procédé selon la revendication 13, dans lequel le matériau d'âme polymère et le matériau de gainage polymère sont perfluorés avec l'ajout de substituants de chlorure.

17. Procédé selon la revendication 13, dans lequel le matériau d'âme polymère et le matériau de gainage polymère sont le même matériau.

18. Procédé selon la revendication 13, dans lequel le matériau d'âme polymère et le matériau de gainage polymère sont des matériaux différents.

**19.** Procédé selon la revendication 10, dans lequel les au moins deux cylindres concentriques de matériau polymère comprennent un cylindre intérieur de matériau d'âme polymère et un cylindre extérieur de matériau de gainage polymère, dans lequel le matériau d'âme polymère et le matériau de gainage polymère sont partiellement fluorés et le matériau de revêtement polymère est perfluoré.

**20.** Procédé selon la revendication 13, dans lequel le matériau d'âme polymère et le matériau de gainage polymère sont organiques.

**21.** Procédé selon la revendication 10, dans lequel les au moins deux cylindres concentriques de matériau polymère de volume cylindrique modifié comprennent un cylindre intérieur de matériau d'âme polymère et un cylindre extérieur de matériau de gainage polymère,
dans lequel le matériau d'âme polymère et le matériau de gainage polymère sont organiques et le matériau de revêtement polymère est partiellement fluoré.

**22.** Procédé selon la revendication 10, dans lequel les au moins deux cylindres concentriques de matériau polymère de volume cylindrique modifié comprennent un cylindre intérieur de matériau d'âme polymère et un cylindre extérieur de matériau de gainage polymère, dans lequel le matériau d'âme polymère et le matériau de gainage polymère sont organiques et le matériau de revêtement polymère est perfluoré.

**23.** Procédé selon la revendication 13, dans lequel les températures de transition vitreuse du matériau d'âme polymère et du matériau de gainage prépolymère sont dans la plage allant d'environ 108˚C à environ 335˚C.

**24.** Procédé selon la revendication 13, dans lequel les températures de transition vitreuse du matériau d'âme polymère et du matériau de gainage polymère sont dans la plage allant d'environ 120˚C à environ 150˚C.

**25.** Procédé selon la revendication 13, dans lequel les indices de réfraction du matériau d'âme polymère et du matériau de gainage polymère sont supérieurs à environ 1,31.

**26.** Procédé selon la revendication 13 dans lequel les indices de réfraction du matériau d'âme polymère et du matériau de gainage polymère sont supérieurs à environ 1,32 et inférieurs à environ 1,38.

**27.** Procédé selon la revendication 13, dans lequel le cylindre intérieur de matériau d'âme polymère comprend l'additif diffusible, dans lequel la différence d'indice de réfraction entre le matériau d'âme polymère et l'additif diffusible est inférieure à environ 0,25.

**28.** Procédé selon la revendication 13, dans lequel le cylindre intérieur de matériau d'âme polymère comprend l'additif diffusible, dans lequel la différence d'indice de réfraction entre le matériau d'âme polymère et l'additif diffusible est inférieure à environ 0,15.

**29.** Procédé selon la revendication 13, dans lequel le cylindre intérieur de matériau d'âme polymère comprend l'additif diffusible, dans lequel la différence d'indice de réfraction entre le matériau d'âme polymère et l'additif diffusible est inférieure à environ 0,075.

**30.** Procédé selon la revendication 13, dans lequel le cylindre extérieur de matériau de gainage polymère comprend l'additif diffusible, dans lequel la différence d'indice de réfraction entre le matériau de gainage polymère et l'additif diffusible est inférieure à environ 0,25.

**31.** Procédé selon la revendication 13, dans lequel le cylindre extérieur de matériau de gainage polymère comprend l'additif diffusible, dans lequel la différence d'indice de réfraction entre le matériau de gainage polymère et l'additif diffusible est inférieure à environ 0,15.

**32.** Procédé selon la revendication 13, dans lequel le cylindre extérieur de matériau de gainage polymère comprend l'additif diffusible, dans lequel la différence d'indice de réfraction entre le matériau de gainage polymère et l'additif diffusible est inférieure à environ 0,075.

**33.** Procédé selon la revendication 11, dans lequel les au moins deux cylindres concentriques de matériau polymère comprennent un cylindre intérieur de matériau d'âme polymère et un cylindre extérieur de matériau de gainage polymère, dans lequel l'indice de réfraction du matériau polymère de revêtement est inférieur à celui de la surface

extérieure du matériau de gainage polymère d'au moins environ 0,005.

**34.** Procédé selon la revendication 11, dans lequel les au moins deux cylindres concentriques de matériau polymère comprennent un cylindre intérieur de matériau d'âme polymère et un cylindre extérieur de matériau de gainage polymère, dans lequel l'indice de réfraction du matériau polymère de revêtement est inférieur à celui de la surface extérieure du matériau de gainage polymère d'au moins environ 0,015.

**35.** Procédé selon la revendication 11, dans lequel les au moins deux cylindres concentriques de matériau polymère comprennent un cylindre intérieur de matériau d'âme polymère et un cylindre extérieur de matériau de gainage polymère, dans lequel l'indice de réfraction du matériau polymère de revêtement est inférieur à celui de la surface extérieure du matériau de gainage polymère d'au moins environ 0,03.

**36.** Procédé selon la revendication 13, dans lequel durant l'étape consistant à préparer le volume cylindrique le matériau d'âme prépolymère et le matériau de gainage prépolymère sont maintenus à une température inférieure à environ 225˚C.

**37.** Procédé selon la revendication 13, dans lequel durant l'étape consistant à préparer le volume cylindrique le matériau d'âme prépolymère et le matériau de gainage prépolymère sont maintenus à une température inférieure à environ 175˚C.

**38.** Procédé selon la revendication 13, dans lequel durant l'étape consistant à préparer le volume cylindrique le matériau d'âme prépolymère et le matériau de gainage prépolymère sont maintenus à une température inférieure à environ 150˚C.

**39.** Procédé selon la revendication 11, dans lequel durant l'étape consistant à entourer le volume cylindrique avec un revêtement, le matériau de revêtement polymère est maintenus à une température inférieure à environ 250˚C.

**40.** Procédé selon la revendication 1, dans lequel le matériau de tubage extérieur garde ses propriétés mécaniques structurelles jusqu'à une température d'au moins environ 175˚C.

**41.** Procédé selon la revendication 1, dans lequel le matériau de tubage extérieur garde ses propriétés mécaniques structurelles jusqu'à une température d'au moins environ 200˚C.

**42.** Procédé selon la revendication 11, dans lequel les au moins deux cylindres concentriques de matériau polymère comprennent un cylindre intérieur de matériau d'âme polymère et un cylindre extérieur de matériau de gainage polymère, dans lequel le matériau de noyau prépolymère est dirigé pour entrer dans une filière, les matériau de gainage prépolymère, matériau de revêtement, et matériau de tubage extérieur entrent dans des têtes d'équerre à l'intérieur de la filière et une fibre extrudée à quatre composants est étirée à partir de la filière.

**43.** Procédé selon la revendication 1, dans lequel l'étape consistant à chauffer le volume cylindrique entouré par le tubage extérieur comprend le fait d'enrouler le volume cylindrique entouré par le tubage extérieur autour un tambour rotatif positionné à l'intérieur d'un four chauffé ayant une température comprise dans la plage allant d'environ 125˚C à environ 200˚C.

**44.** Procédé selon la revendication 43, dans lequel le volume cylindrique entouré par le tubage extérieur est exposé à de l'énergie à l'intérieur du four.

**45.** Procédé selon la revendication 9, dans lequel l'étape consistant à recuire le volume cylindrique entouré par le tube extérieur comprend le fait d'enrouler le volume cylindrique entouré par le tubage extérieur autour un tambour rotatif dans un four pendant une certaine période pour réduire la contrainte résiduelle à l'intérieur du matériau polymère de transmission de lumière.

**46.** Procédé selon la revendication 9, dans lequel la différence de température radiale entre l'axe de volume cylindrique et le tubage extérieur est maintenue inférieure à environ 6˚C au cours de la période durant laquelle la température du volume cylindrique entouré par le tubage extérieur atteint la température ambiante.

**47.** Procédé selon la revendication 9, dans lequel la différence de température radiale entre l'axe de volume cylindrique et le tubage extérieur est maintenue inférieure à environ 3˚C au cours de la période durant laquelle la température

du volume cylindrique entouré par le tubage extérieur atteint la température ambiante.

**48.** Procédé selon la revendication 45, dans lequel l'étape consistant à chauffer le volume cylindrique entouré par le tube extérieur est réalisée dans le four.

**49.** Procédé selon la revendication 1, dans lequel la flexibilité du volume cylindrique entouré par le tubage extérieur est augmentée en étirant le volume cylindrique entouré par le tubage extérieur selon un rapport compris entre environ 1,5 et environ 4,0 à une température minimum permise par le matériau de tubage extérieur.

**50.** Procédé de la revendication 1, dans lequel le support de transmission optique en plastique présente une atténuation optique inférieure à 20 dB/km à une longueur d'onde de 850 nm.

**51.** Procédé de la revendication 1, dans lequel le support de transmission optique en plastique présente une atténuation optique inférieure à 10 dB/km à une longueur d'onde de 850 nm.

**52.** Procédé de la revendication 1, dans lequel le support de transmission optique en plastique présente une atténuation optique inférieure à 7 dB/km à une longueur d'onde de 850 nm.

**53.** Procédé de la revendication 1, dans lequel le support de transmission optique en plastique est une fibre optique en plastique à gradient d'indice.

**54.** Procédé de la revendication 1, comprenant en outre l'étape consistant à chemiser le volume cylindrique entouré par le tubage extérieur pour produire un câble simplex.

**55.** Procédé de la revendication 1, comprenant en outre l'étape consistant à répéter les étapes consistant à préparer, entourer, exposer, et chauffer pour produire au moins un volume cylindrique supplémentaire entouré par au moins un tubage extérieur supplémentaire correspondant, dans lequel chaque étape répétée est réalisée essentiellement simultanément avec l'étape correspondante.

**56.** Procédé de la revendication 55, comprenant en outre l'étape consistant à chemiser le volume cylindrique entouré par le tubage extérieur et un de l'au moins un volume cylindrique supplémentaire entouré par au moins un tubage extérieur supplémentaire correspondant pour produire un câble duplex.

**57.** Procédé de la revendication 55, comprenant en outre l'étape consistant à chemiser le volume cylindrique entouré par le tubage extérieur et sept de l'au moins un volume cylindrique supplémentaire entouré par au moins un tubage extérieur supplémentaire correspondant pour produire un câble ruban.

**58.** Procédé selon la revendication 55, comprenant en outre l'étape consistant à chemiser le volume cylindrique entouré par le tubage extérieur et l'au moins un volume cylindrique supplémentaire entouré par au moins un tubage extérieur supplémentaire correspondant pour produire un câble multifibre.

**59.** Procédé de fabrication d'un support de transmission optique en plastique avec un indice de réfraction variant de façon radiale, comprenant les étapes consistant à :

préparer un volume cylindrique ayant au moins deux cylindres concentriques de matériau prépolymère ;
entourer ledit volume cylindrique avec un tubage extérieur, dans lequel le tubage extérieur est concentrique avec le volume cylindrique, dans lequel ledit tubage extérieur comprend un matériau polymère ayant une température de point de ramollissement inférieure aux températures de transition vitreuse de l'un quelconque desdits au moins deux cylindres concentriques de matériau prépolymère ; et
exposer les au moins deux cylindres concentriques de matériau prépolymère à de l'énergie, dans lequel l'étape consistant à exposer le volume cylindrique à de l'énergie augmente le poids moléculaire du matériau prépolymère des au moins deux cylindres concentriques de matériau prépolymère afin de transformer le matériau prépolymère en un matériau polymère et produire un volume cylindrique ayant au moins deux cylindres concentriques de matériau polymère ;

dans lequel le support de transmission optique en plastique est une fibre optique en plastic à saut d'indice.

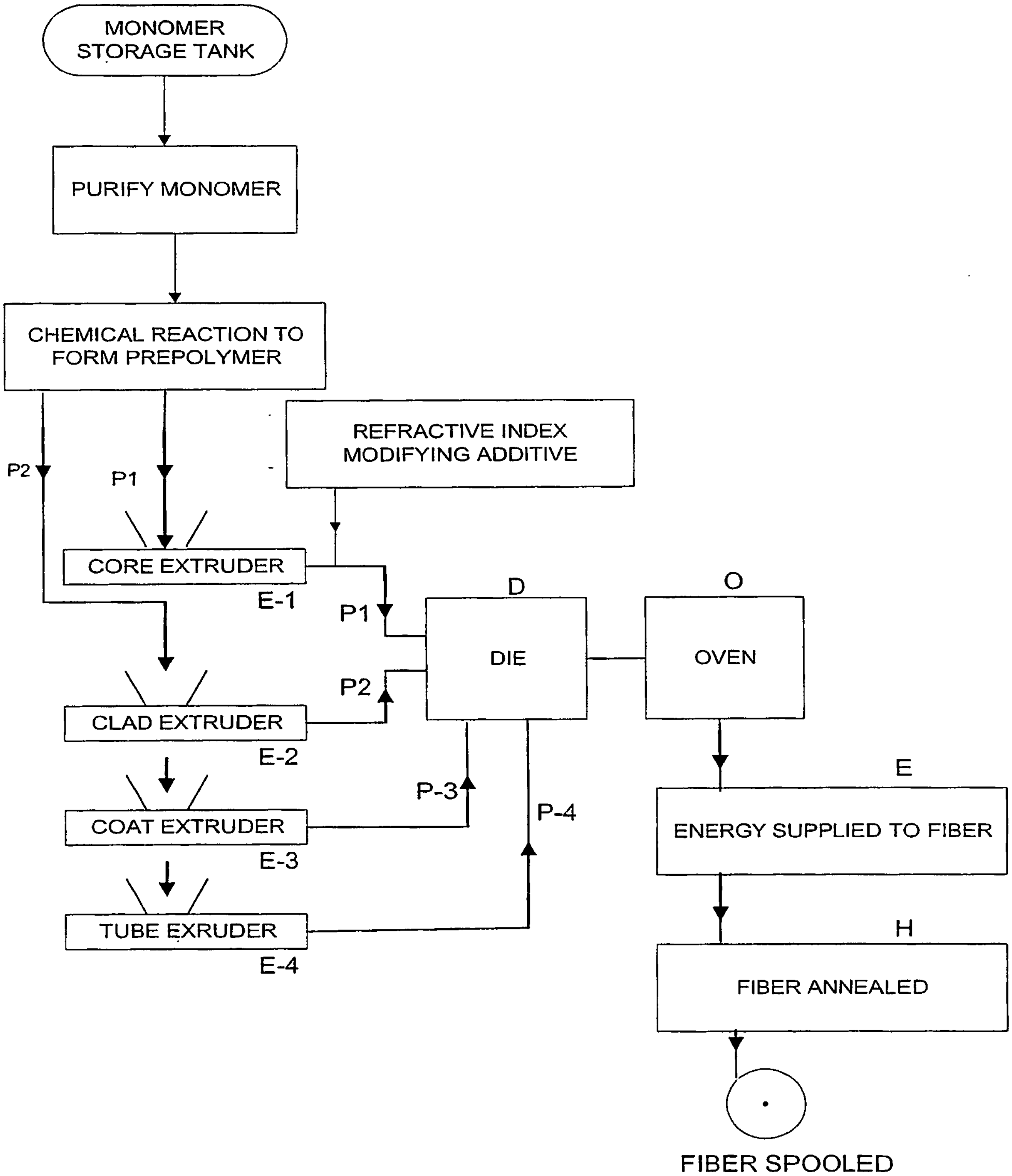
MONOMER STORAGE TANK
PURIFY MONOMER
CHEMICAL REACTION TO FORM PREPOLYMER
REFRACTIVE INDEX MODIFYING ADDITIVE
P2
P1
CORE EXTRUDER
E-1
P1
D
DIE
O
OVEN
P2
CLAD EXTRUDER
E-2
P-3
E
COAT EXTRUDER
E-3
P-4
ENERGY SUPPLIED TO FIBER
TUBE EXRUDER
E-4
H
FIBER ANNEALED
FIBER SPOOLED

FIGURE 1

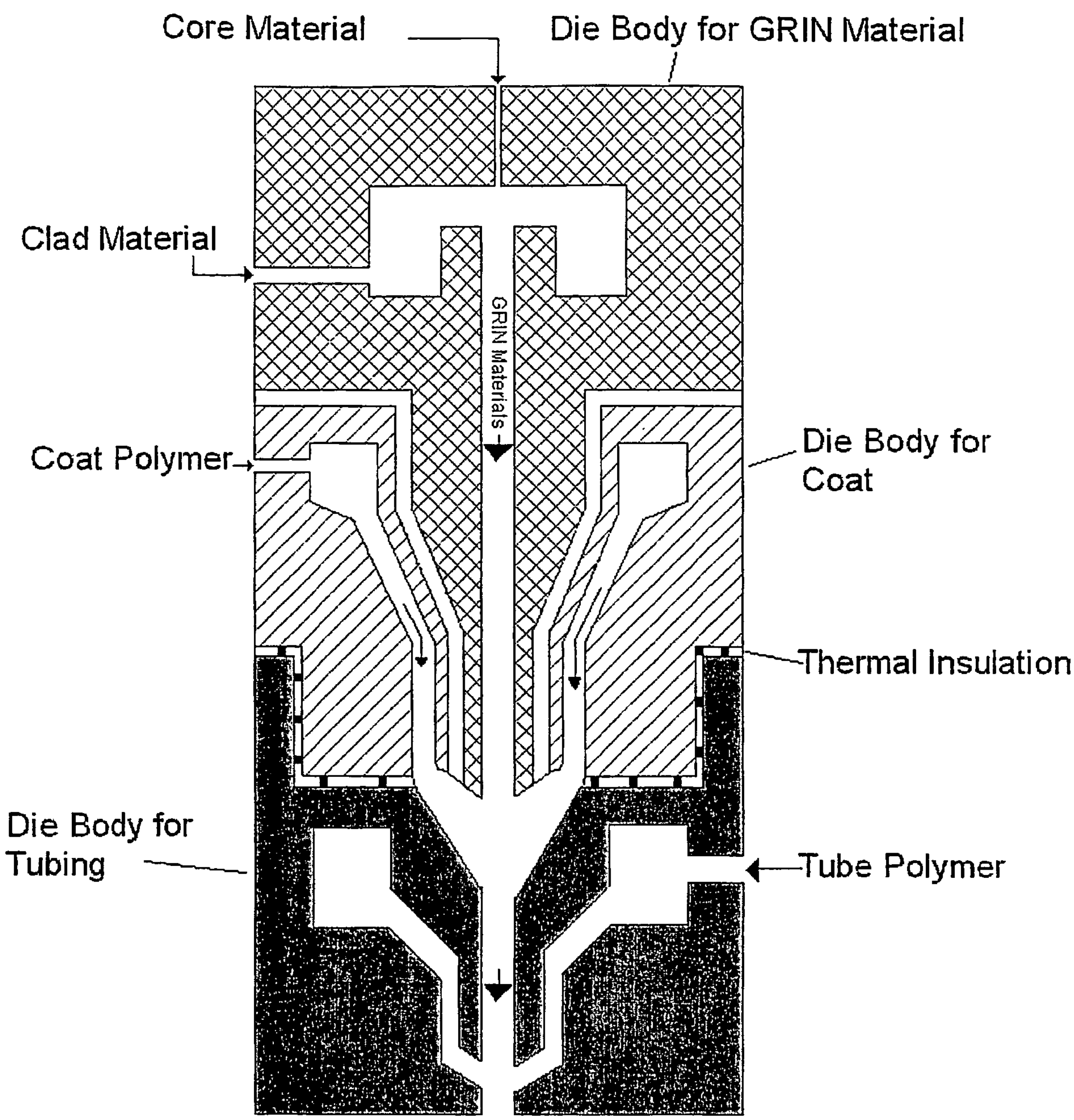
Core Material
Die Body for GRIN Material
Clad Material
GRIN Materials
Coat Polymer
Die Body for Coat
Thermal Insulation
Die Body for Tubing
Tube Polymer

Figure 2

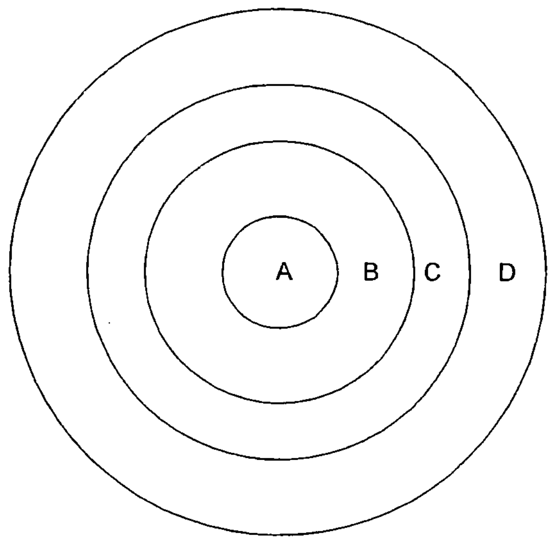


Figure 3

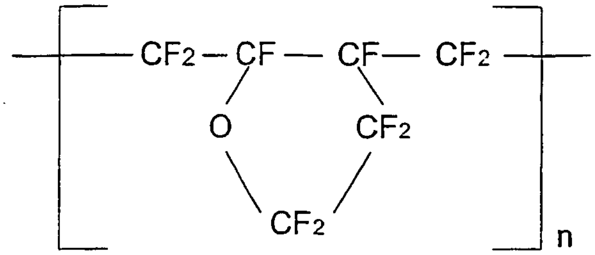

Figure 4 – CYTOP® Structure

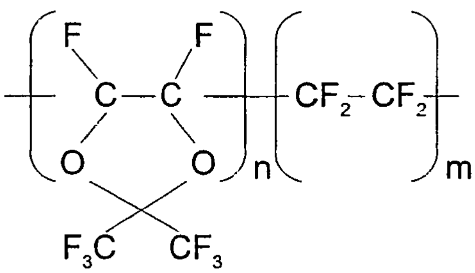

Figure 5 – Teflon® AF Structure

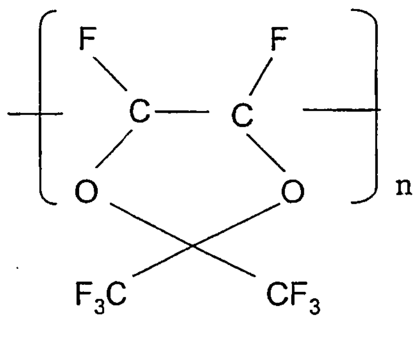

Figure 6

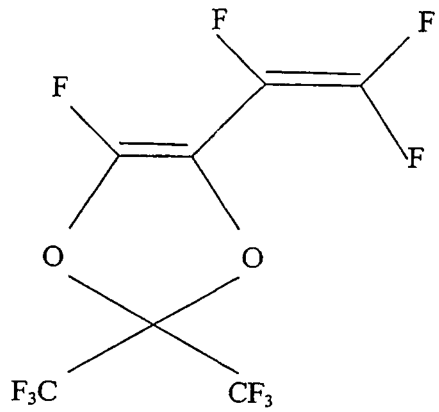

Figure 7

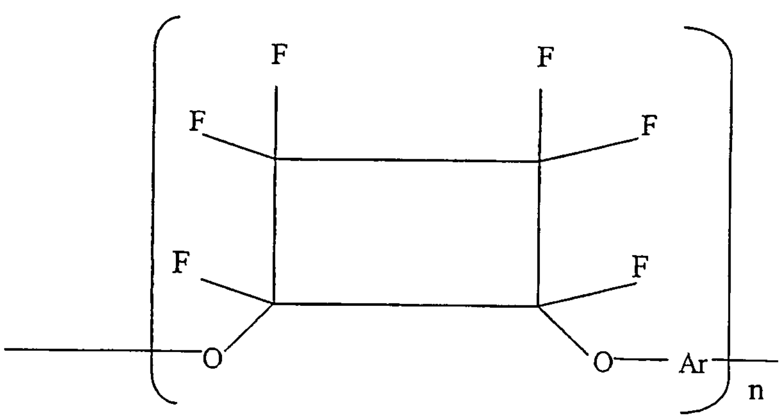

Figure 8

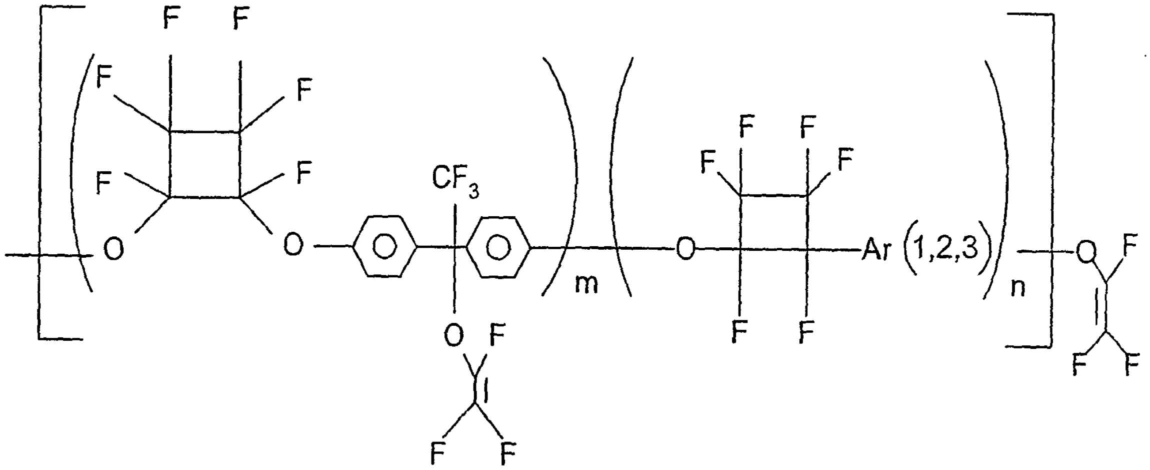

Figure 9

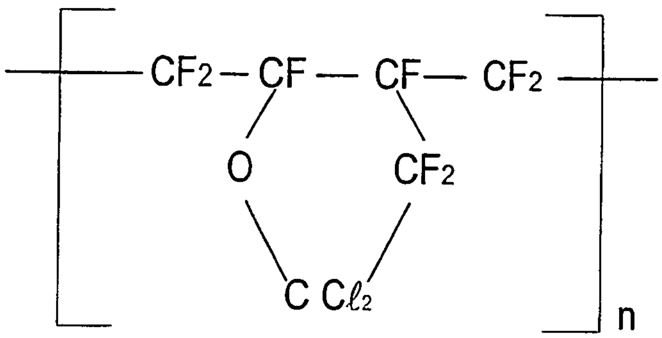

Figure 10

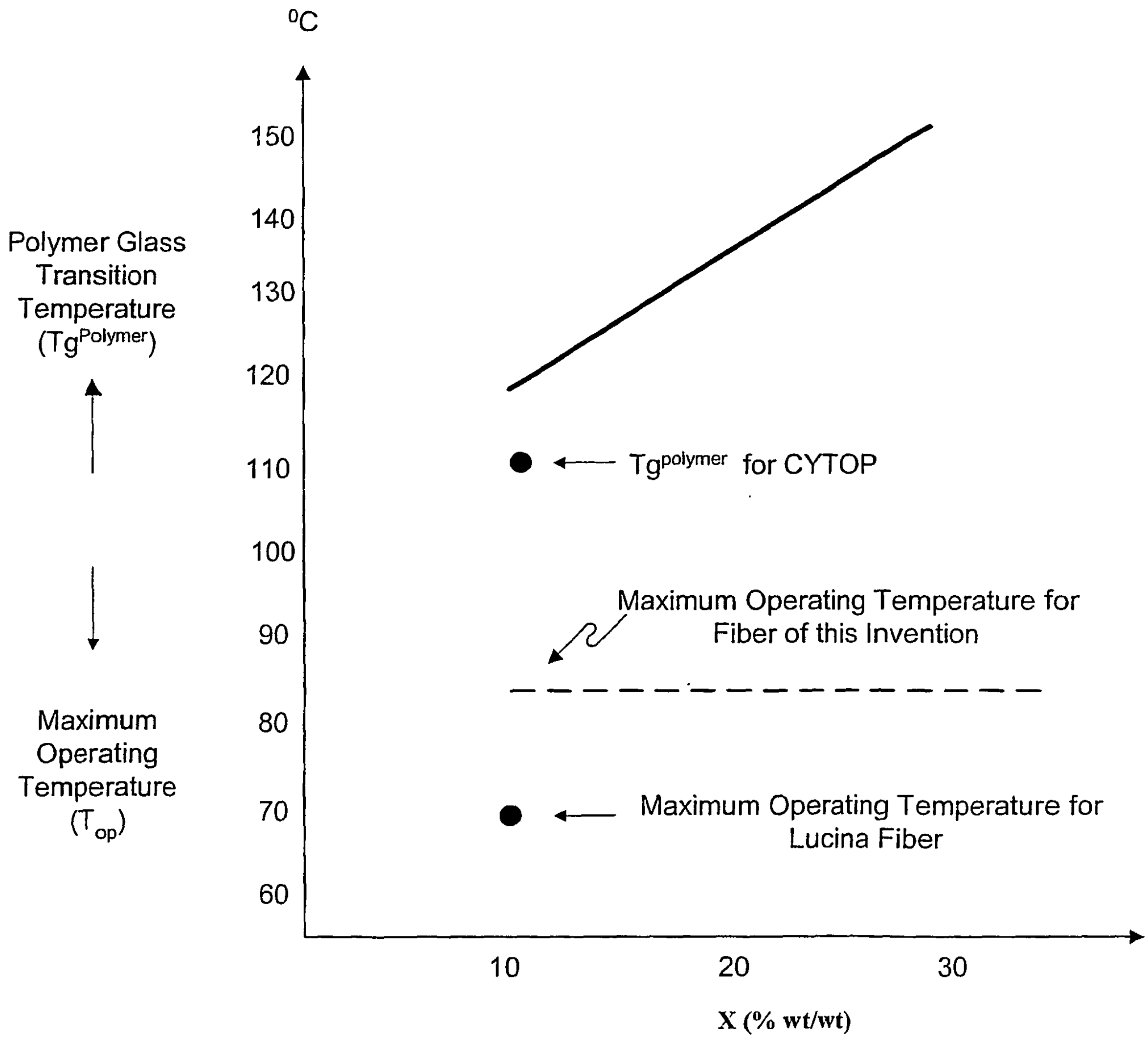
°C
150
140
130
120
110
100
90
80
70
60
Polymer Glass Transition Temperature ($Tg^{Polymer}$)
Maximum Operating Temperature ($T_{op}$)
$Tg^{polymer}$ for CYTOP
Maximum Operating Temperature for Fiber of this Invention
Maximum Operating Temperature for Lucina Fiber
10
20
30
X (% wt/wt)

Figure 11

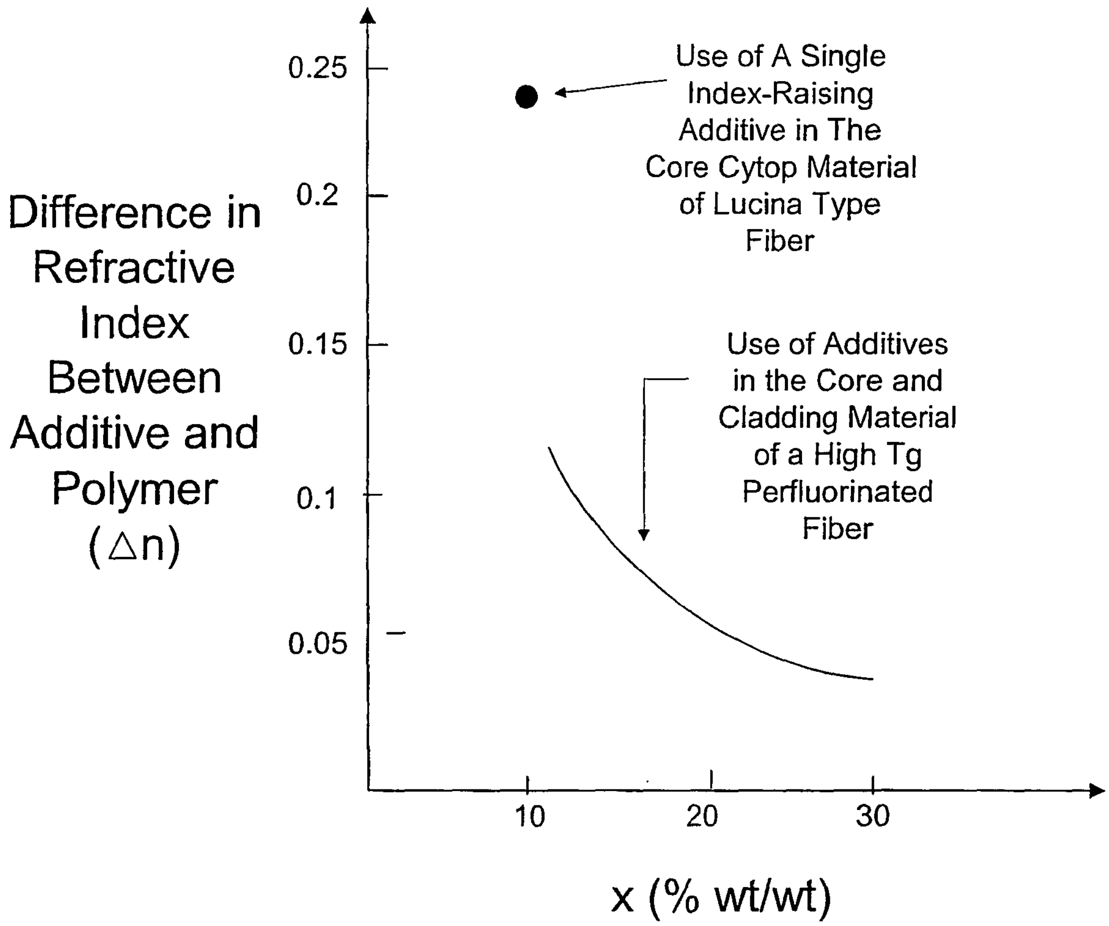
Difference in Refractive Index Between Additive and Polymer (△n)
0.25
0.2
0.15
0.1
0.05
Use of A Single Index-Raising Additive in The Core Cytop Material of Lucina Type Fiber
Use of Additives in the Core and Cladding Material of a High Tg Perfluorinated Fiber
10
20
30
x (% wt/wt)

Figure 12

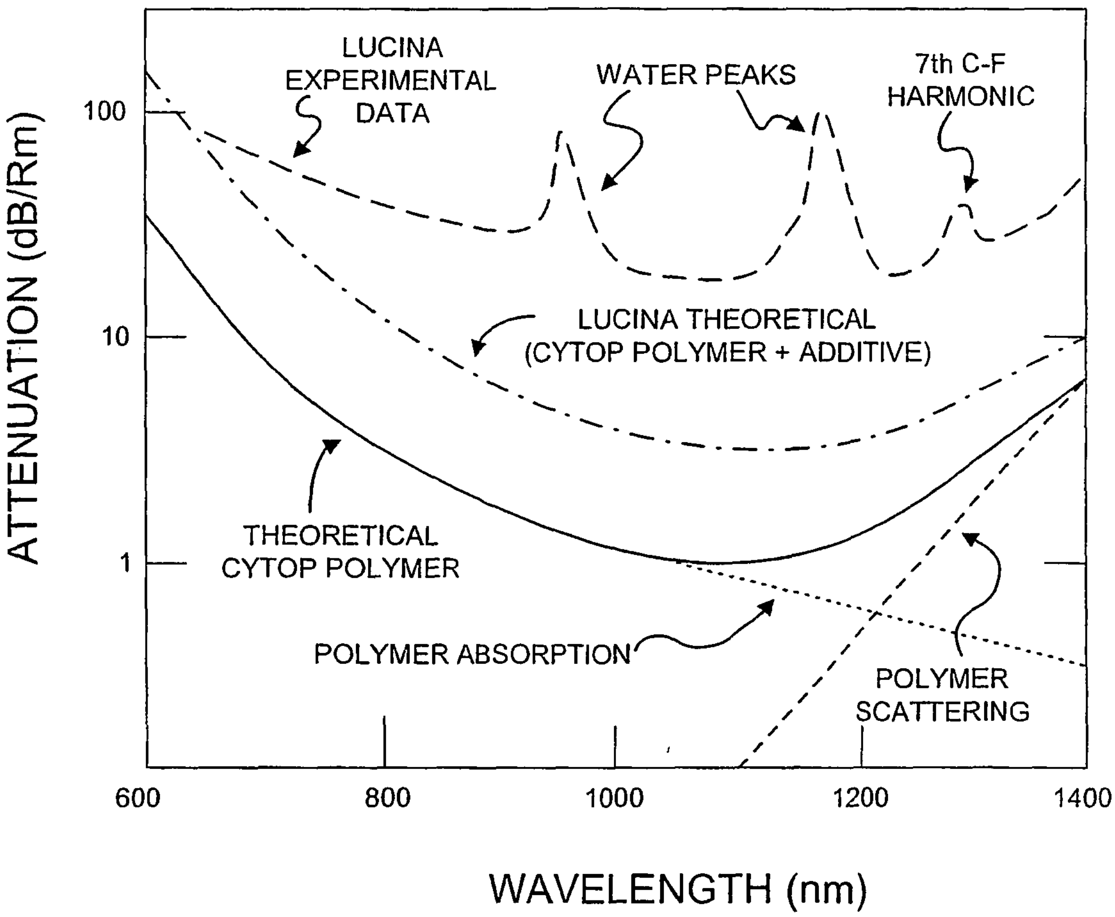
LUCINA EXPERIMENTAL DATA
WATER PEAKS
7th C-F HARMONIC
100
10
1
ATTENUATION (dB/Rm)
LUCINA THEORETICAL (CYTOP POLYMER + ADDITIVE)
THEORETICAL CYTOP POLYMER
POLYMER ABSORPTION
POLYMER SCATTERING
600
800
1000
1200
1400
WAVELENGTH (nm)

Figure 13

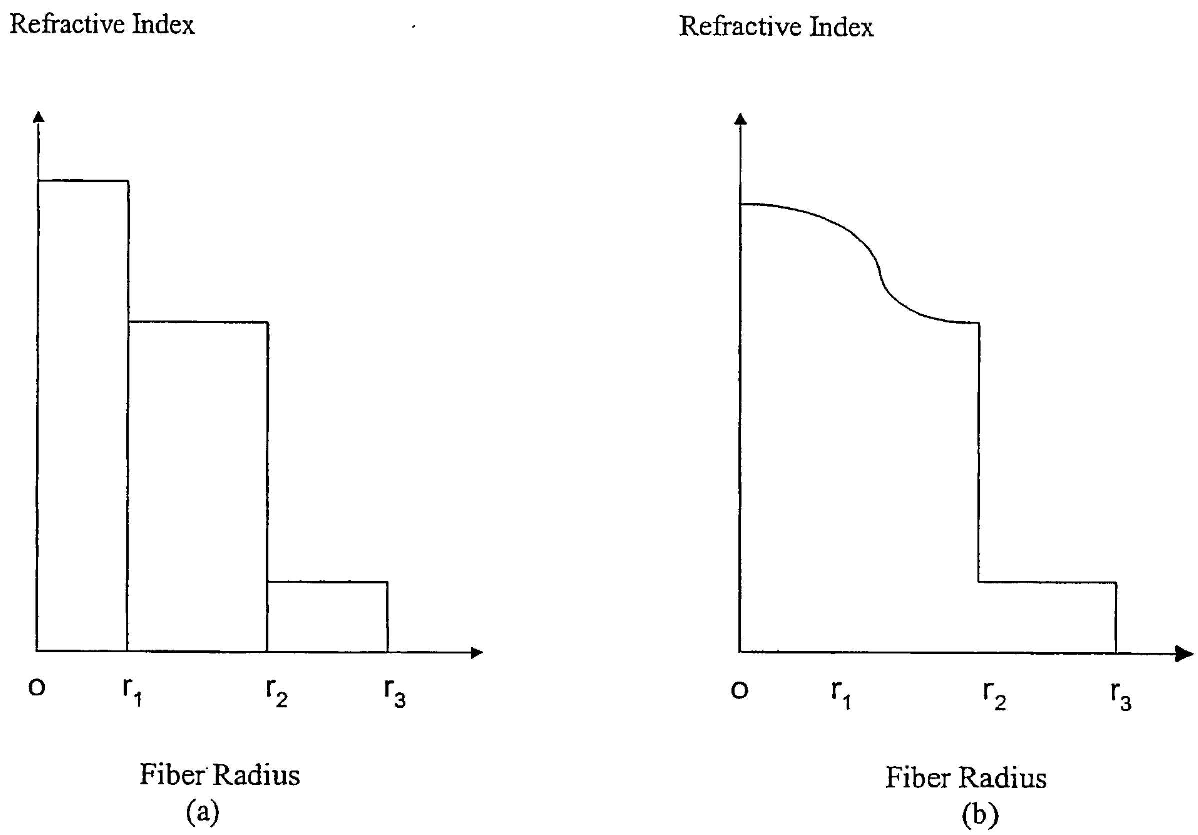
Refractive Index
o
$r_1$
$r_2$
$r_3$
Fiber Radius
(a)
Refractive Index
o
$r_1$
$r_2$
$r_3$
Fiber Radius
(b)

Figure 14

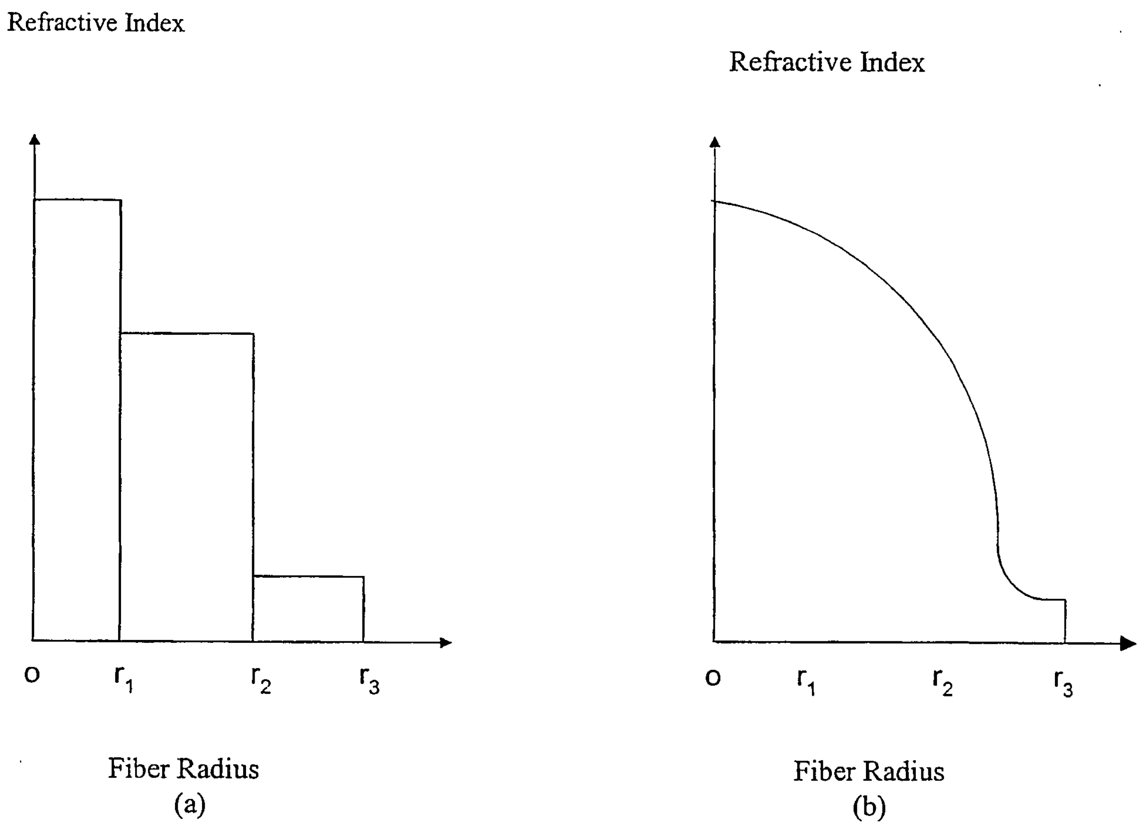
Refractive Index
o
$r_1$
$r_2$
$r_3$
Fiber Radius
(a)
Refractive Index
o
$r_1$
$r_2$
$r_3$
Fiber Radius
(b)

Figure 15

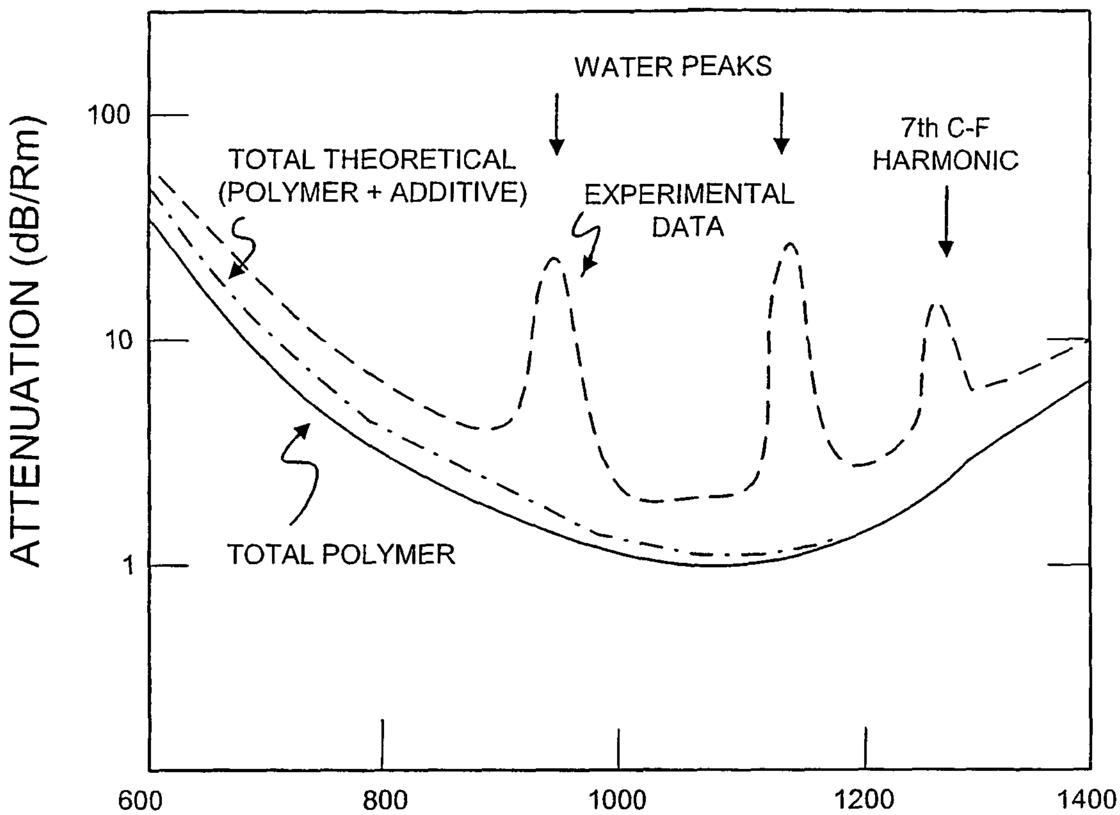
ATTENUATION (dB/Rm)
WATER PEAKS
7th C-F
HARMONIC
TOTAL THEORETICAL
(POLYMER + ADDITIVE)
EXPERIMENTAL
DATA
TOTAL POLYMER
100
10
1
600
800
1000
1200
1400

Figure 16

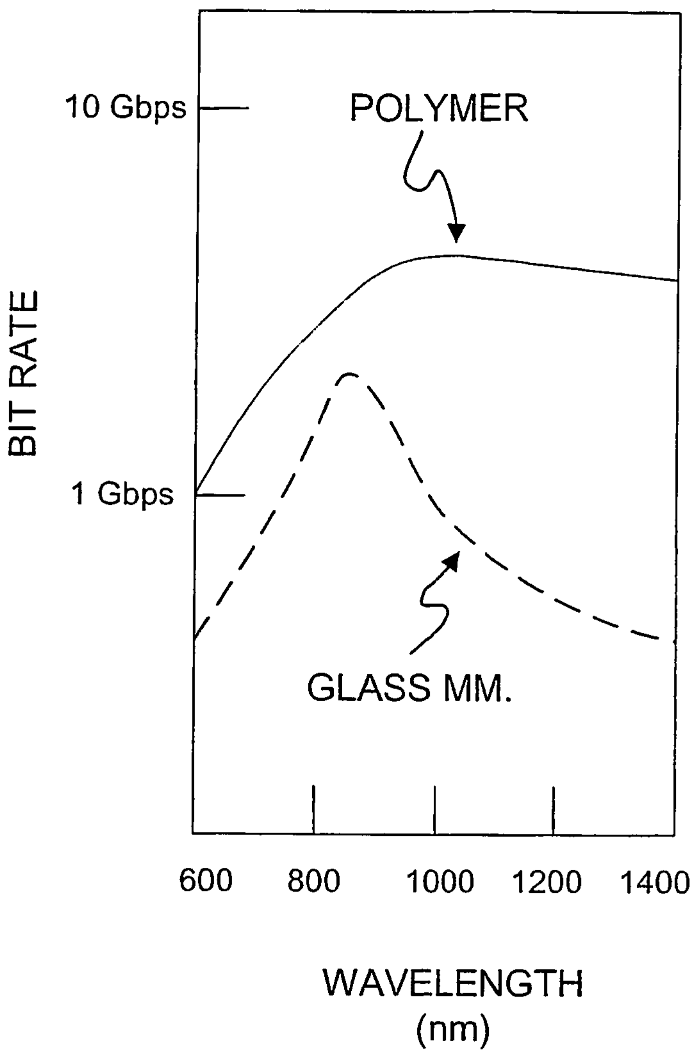
10 Gbps
POLYMER
BIT RATE
1 Gbps
GLASS MM.
600
800
1000
1200
1400
WAVELENGTH
(nm)

Figure 17

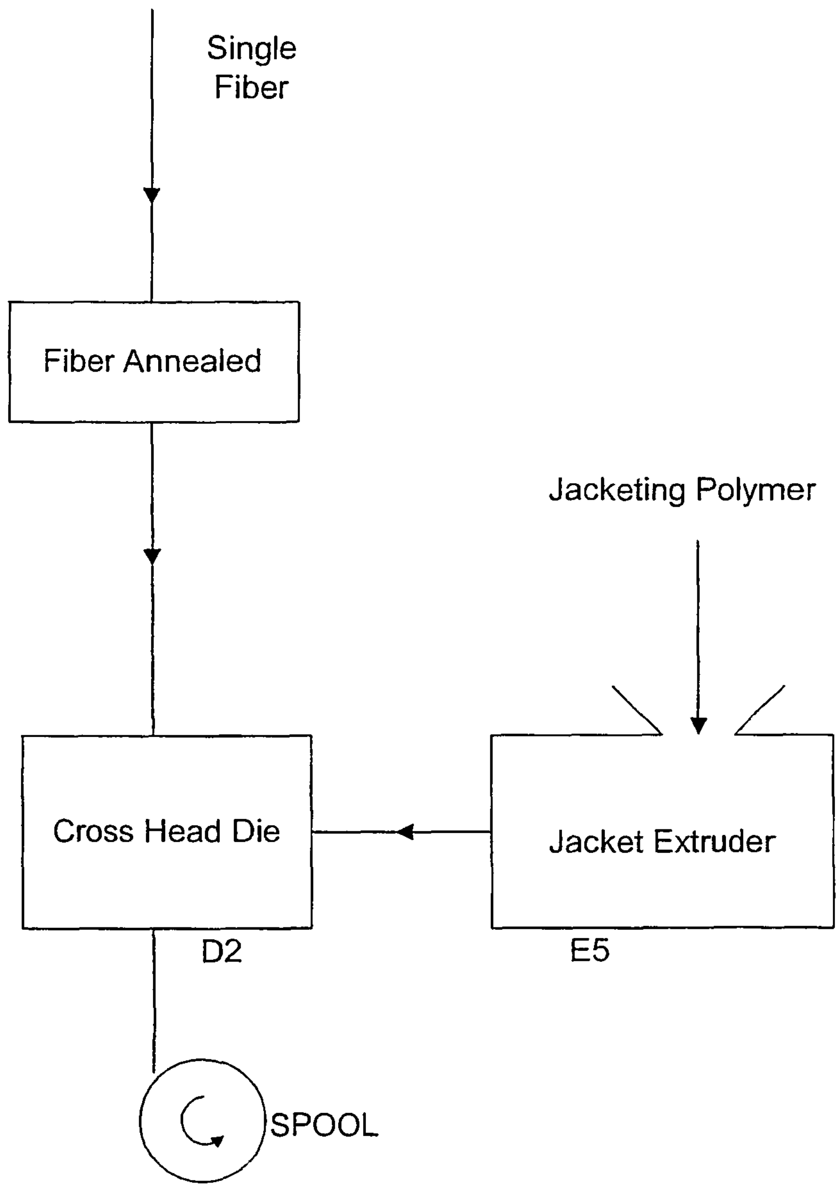


SIMPLEX JACKETED FIBER

Figure 18

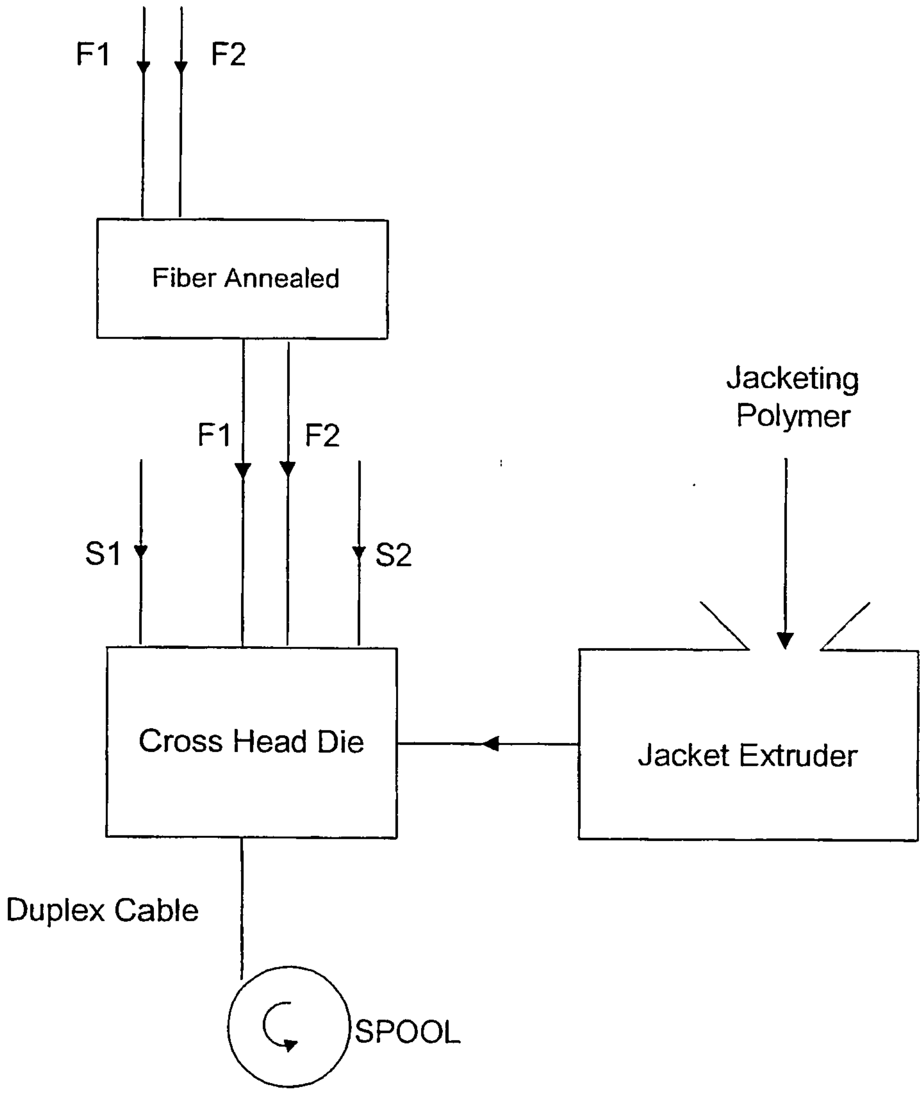


DUPLEX JACKETED FIBER

Figure 19

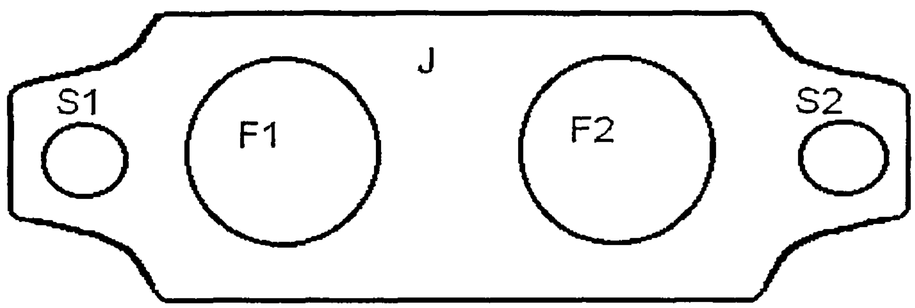


Figure 20

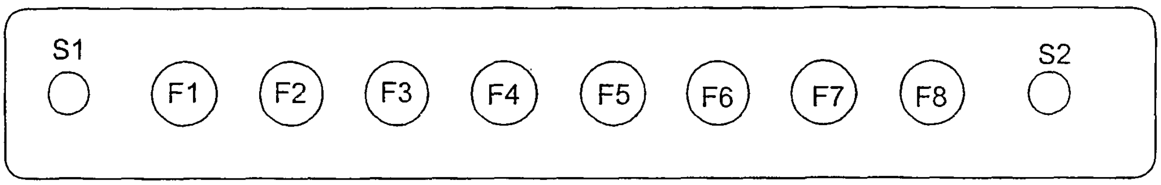


Figure 21

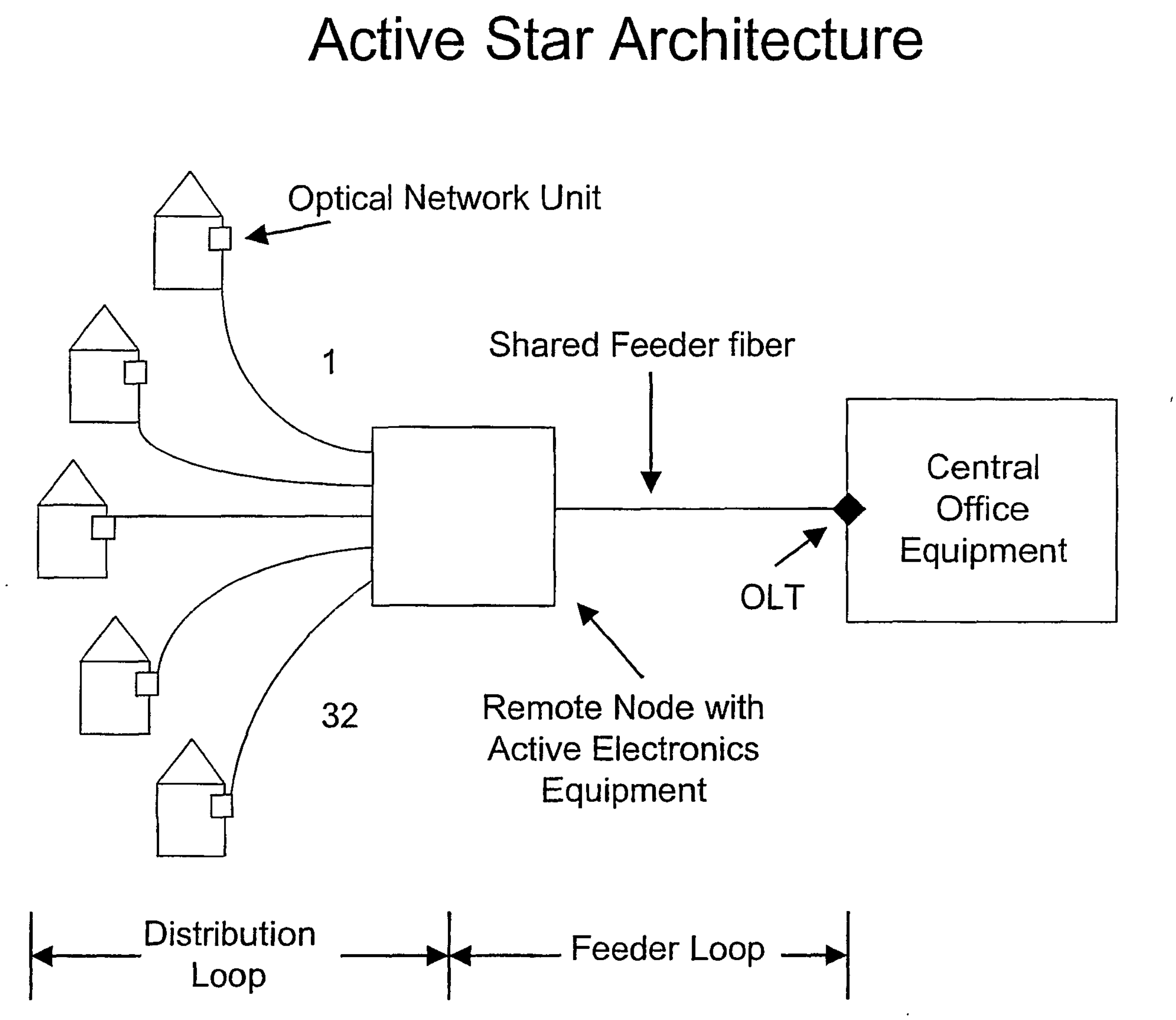
Active Star Architecture
Optical Network Unit
1
Shared Feeder fiber
Central Office Equipment
OLT
32
Remote Node with Active Electronics Equipment
Distribution Loop
Feeder Loop

Figure 22

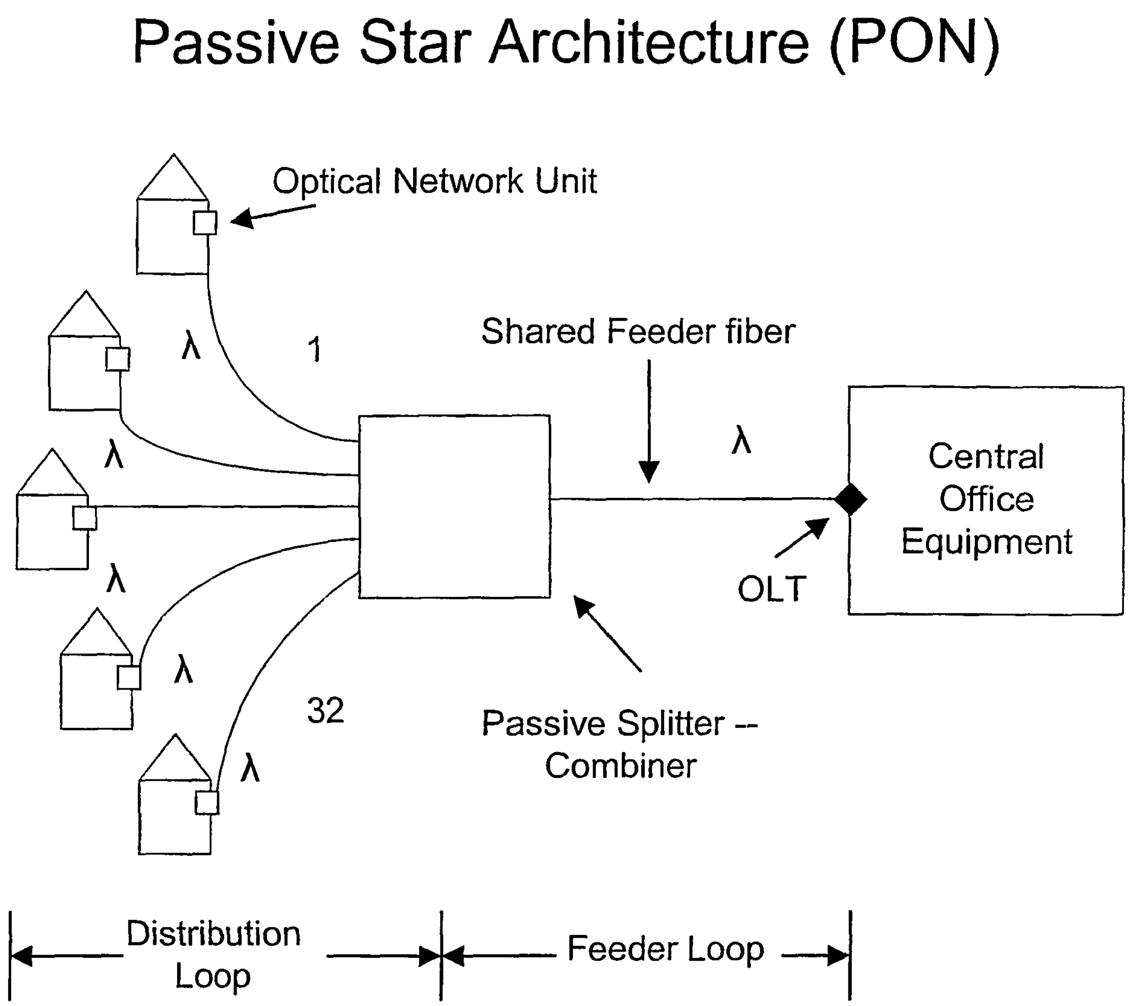
Passive Star Architecture (PON)
Optical Network Unit
λ
1
Shared Feeder fiber
λ
λ
Central
Office
Equipment
λ
OLT
λ
32
λ
Passive Splitter --
Combiner
Distribution
Loop
Feeder Loop

Figure 23

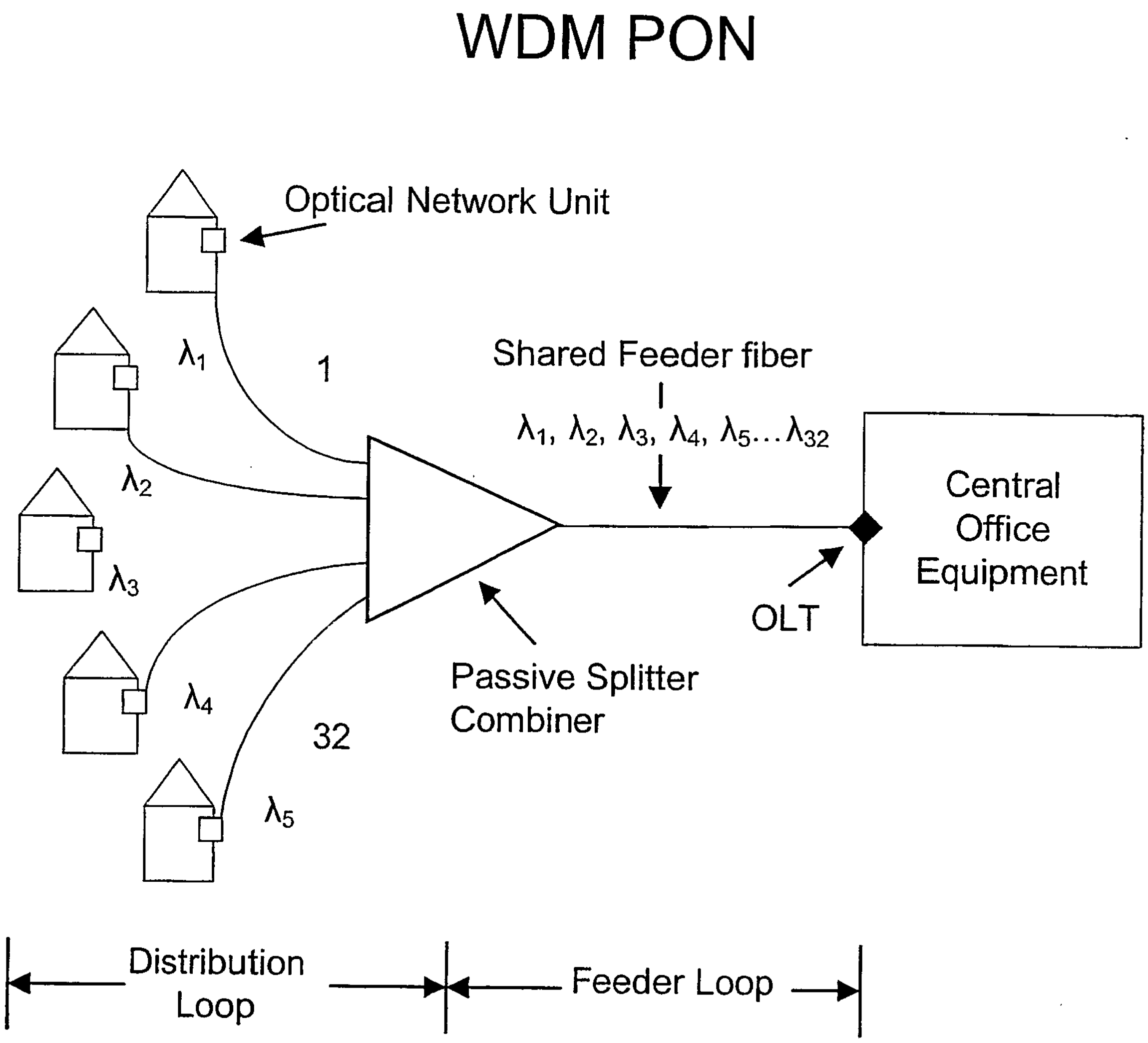
WDM PON
Optical Network Unit
λ1
1
λ2
λ3
λ4
32
λ5
Shared Feeder fiber
λ1, λ2, λ3, λ4, λ5...λ32
Central Office Equipment
OLT
Passive Splitter Combiner
Distribution Loop
Feeder Loop

Figure 24

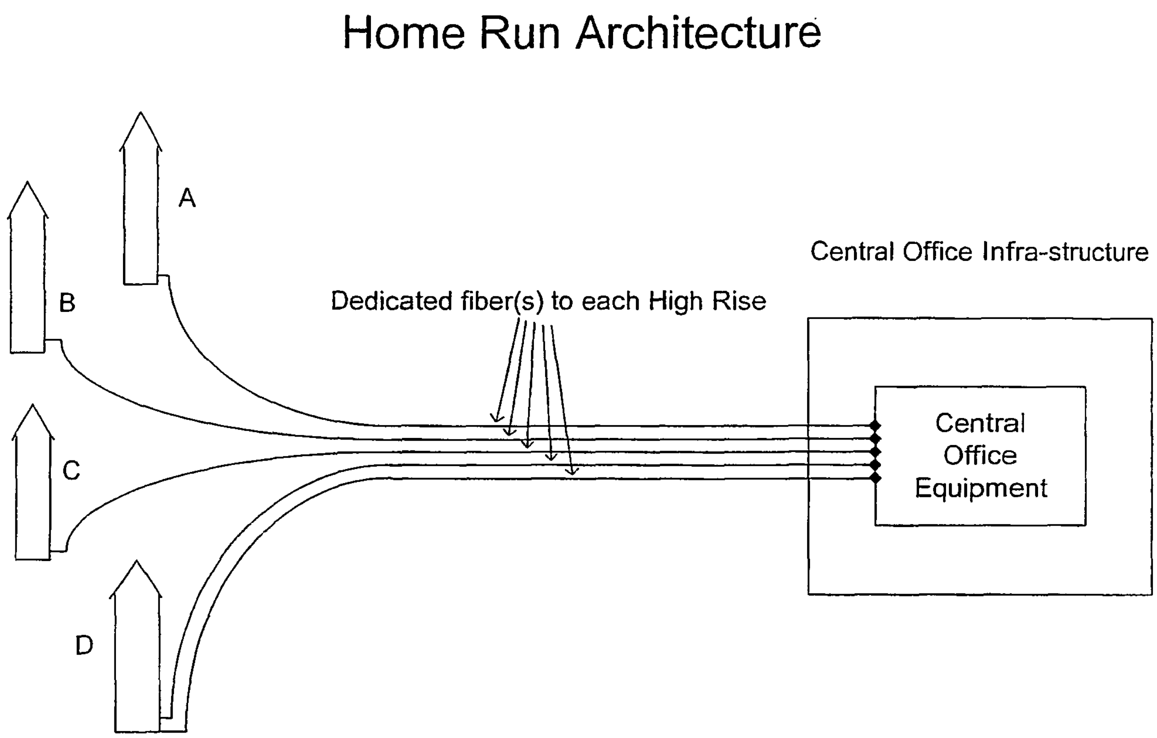
Home Run Architecture
A
B
C
D
Dedicated fiber(s) to each High Rise
Central Office Infra-structure
Central
Office
Equipment

Figure 25